(19) Europäisches Patentamt

European Patent Office

Office européen des brevets

(11) **EP 3 483 761 A1**

(12) **EUROPEAN PATENT APPLICATION**

(43) Date of publication:
**15.05.2019 Bulletin 2019/20**

(51) Int Cl.:
**G06F 21/31** (2013.01)     **G06F 21/36** (2013.01)
**G06F 21/32** (2013.01)     **G06K 9/00** (2006.01)

(21) Application number: **17201047.2**

(22) Date of filing: **10.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **M-cubator GmbH & Co KG
82140 Oiching (DE)**

(72) Inventors:
• **Boyce, Julian
  80469 Munich (DE)**
• **Kuzelj, Robert
  82140 Olching (DE)**

(74) Representative: **Betten & Resch
Patent- und Rechtsanwälte PartGmbB
Maximiliansplatz 14
80333 München (DE)**

(54) **METHODS AND SYSTEMS FOR GENERATING USER IDENTIFYING DATA AND FOR USING THE USER IDENTIFYING DATA FOR AUTHENTICATING THE USER**

(57)     The present invention is directed to generating of user identifying data based on an initial drawing and a set of training drawings drawn via a touch screen on a predetermined image visualized on the touch screen. Further, the present invention is directed to authenticating a user based on the corresponding user identifying data. Additionally, the present invention is directed to generating the predetermined image to be used for the generation of user identifying data and the authenticating of the user.

Fig. 3b

EP 3 483 761 A1

**Description**

TECHNICAL FIELD

The present invention is directed to generating of user identifying data and to using the user identifying data for authenticating the user.

BACKGROUND

Different authentication methods are known. The evolution of authentication against various systems has evolved from the simple alphanumeric username and password combination to an array of multi-factor authentication techniques including, for example, hard tokens, soft tokens, face recognition, fingerprint identification, PIN and TAN numbers, etc.

The traditional alphanumeric username and password suffers from the cyclic problem that passwords, which are easy to remember, are easy to break and that sufficiently complex passwords cannot be remembered. Facial recognition is in danger of 3D face reconstruction from user images, which are often a part of the public domain and, thus, are readily available at social media sites. Fingerprints can be collected through basic forensic measures and, furthermore, are in the explicit possession of various entities, for example governments. Thus, also fingerprint data do not represent a sufficiently safe data. PIN and TAN numbers are cumbersome in physical or electronic form and, furthermore, depend on delivery mechanisms susceptible to being intercepted. Thus, at least the majority of known authentication methods still leave room for improvement.

Consequently, there is still a need for strong authentication methods and systems that meet security requirements (e.g., ensure high passwords strength) and, at the same time, are easy to handle and allow use of passwords that a user may remember.

SUMMARY

The present invention as defined in claims and as described herein allows an improved authentication method and generation of secure passwords that a user may easily remember. A password of the present invention is entered by the user via a touch screen and comprises a drawing drawn on a predetermined image on the touch screen. The user has the possibility to train the drawing of the password on the touch screen multiple times, which enables the user to remember the password. On the other side, the initial drawing of the user as well as the subsequent training drawings are used to generate a secure user identifying data, which may not readily be obtained and misused by another person. For the authentication, a corresponding authentication drawing is required that generally matches the initial drawing and the training drawings. However, the authentication is not executed by a pure comparison of the drawing as such, the user identifying information, generated by use of the initial drawing and the training drawings, is required for executing the authentication. For example, while a user draws a drawing on a touch screen and understands this drawing as a password, the system does not consider and compare the drawing and the initial drawing only for the authentication purpose. Rather, the system requires the user identifying information, generated by use of the initial drawing and the training drawings, to decide on whether or not the authentication is successful.

According to an aspect of the present invention, a method arranged to generate user identifying data for identifying a user is provided, the method comprising: receiving data on an initial drawing drawn by the user via a touch screen on a predetermined image visualized via the touch screen; receiving data on a set of training drawings drawn by the user via the touch screen on the predetermined image; and generating, by use of the data on the initial drawing and by use of the data of the set of training drawings, the user identifying data that is associated with the predetermined image and that allows an identification of the user.

According to an aspect of the present invention, a system arranged to generate user identifying data for identifying a user is provided, wherein the system is configured to execute steps of the method arranged to generate user identifying data for identifying the user and being configured as described herein.

According to an aspect of the present invention, a machine-readable medium is provided that comprises instructions stored therein, the instructions, when executed by a computer, causing the computer to perform steps of the method arranged to generate user identifying data for identifying the user and being configured as described herein. According to an embodiment of the present invention, the machine readable medium is a non-transitory medium.

According to an aspect of the present invention, a method arranged to authenticate a user is provided, the method comprising: receiving data on an authentication drawing drawn by the user via a touch screen on a predetermined image visualized via the touch screen; determining, by use of a user identifying information, whether the authentication drawing matches an initial drawing on the predetermined image and training drawings of a set of training drawings, the initial drawing and the training drawings being drawn by the user, via the touch screen, on the predetermined image and being used for generating the user identifying information; and authenticating the user if the authentication drawing matches the initial drawing and the training drawings of the set of training drawings.

According to an aspect of the present invention, a system arranged to authenticate a user is provided, wherein the system is configured to execute steps of the method arranged to authenticate the user as described herein.

According to an aspect of the present invention, a machine-readable medium is provided that comprises instructions stored therein, said instructions, when executed by a computer, causing the computer to perform steps of the method arranged to authenticate the user as described herein.

According to an embodiment of the present invention, the data on the initial drawing comprises, with regard to a drawing time spent by the user to draw the initial drawing, a set of parameter data that occurred during the drawing of the initial drawing via the touch screen, wherein each parameter data of the set of parameter data is associated with a respective time point, at which the parameter data occurred when drawing the initial drawing.

According to an embodiment of the present invention, the data on the set of training drawings comprises for each training drawing of the set of training drawings, with regard to a drawing time spent by the user to draw the respective training drawing, a corresponding set of parameter data that occurred during the drawing of the respective training drawing via the touch screen, wherein each parameter data of the set of parameter data is associated with a respective time point, at which the parameter data occurred when drawing the respective training drawing.

According to an embodiment of the present invention, the data on the authentication drawing comprises, with regard to a drawing time spent by the user to draw the authentication drawing, a corresponding set of parameter data that occurred during the drawing of the authentication drawing via the touch screen, wherein each parameter data of the set of parameter data is associated with a respective time point, at which the parameter data occurred when drawing the authentication drawing.

According to an embodiment of the present invention, the time points, associated with the parameter data, are equally or at least essentially equally spaced.

According to an embodiment of the present invention, each parameter data of the set of parameter data, which occurred during the drawing of the initial drawing via the touch screen, comprises at least one of the following parameters: pressure on the touch screen; coordinates of the initial drawing indicating on the predetermined image a pixel of the initial drawing; speed; and/or acceleration.

According to an embodiment of the present invention, each parameter data of the set of parameter data, which occurred during the drawing of the respective training drawing via the touch screen, comprises at least one of the following parameters: pressure on the touch screen; coordinates of the respective training drawing indicating on the predetermined image a pixel of the respective training drawing; speed; and/or acceleration.

According to an embodiment of the present invention, each parameter data of the set of parameter data, which occurred during the drawing of the authentication drawing via the touch screen, comprises at least one of the following parameters: pressure on the touch screen; coordinates of the authentication drawing indicating on the predetermined image a pixel of the authentication drawing; speed; and/or acceleration.

According to an embodiment of the present invention, the user identifying data comprises a tolerance information for determining whether or not another drawing, drawn by the user via the touch screen on the predetermined image, matches the initial drawing and/or the training drawings of the set of the trainings drawings.

According to an embodiment of the present invention, the generating of the user identifying data comprises determining the tolerance information.

According to an embodiment of the present invention, the tolerance information indicates/comprises a tolerance information with regard to at least one parameter occurring when drawing on the touch screen.

According to an embodiment of the present invention, the at least one parameter comprises at least one of the following: pressure on the touch screen, coordinates of a drawing indicating on the predetermined image a pixel of the drawing, speed, and/or acceleration.

According to an embodiment of the present invention, the tolerance information indicates a tolerance range of allowable accumulated distances, each accumulated distance being an accumulated distance on distances between parameter data of two drawings, wherein the distances are determined for parameter data having corresponding time points.

According to an embodiment, each accumulated distance is a sum of the distances between parameter data of two drawings, the distances being determined for parameter data having corresponding time points.

According to an embodiment of the present invention, the determining of the tolerance information comprises, for each training drawing of the set of training drawings, determining a respective accumulated distance on distances between the parameter data of the set of parameter data of the data on the initial drawing and the parameter data of the set of parameter data of the data on the respective training drawing, wherein the distances are determined for parameter data having corresponding time points. According to an embodiment of the present invention, the time points are equally or at least essentially equally spaced. According to an embodiment of the present invention, the determining of the respective accumulated distance is executed by applying a dynamic time warping. According to an embodiment of the present invention, the determining of the tolerance information comprises determining a standard deviation from a mean of the accumulated distances. According to an embodiment of the present invention, a lower bound of the tolerance range is determined by subtracting, from the mean of the accumulated distances, the standard deviation from the mean of the accumulated distances; and/or an upper bound of the tolerance range is determined by adding the mean of the accumulated distances and the standard deviation from the mean of the accumulated distances.

According to an embodiment of the present invention, the method (particularly, the method for generating the user identifying data) further comprises receiving data on a further drawing on the predetermined image, the further drawing being drawn by the user via the touch screen on the predetermined image visualized via the touch screen.

According to an embodiment of the present invention, the data on the further drawing comprises, with regard to the drawing time spent by the user to draw the further drawing, a corresponding set of parameter data that occurred during the drawing of the further drawing via the touch screen, wherein each parameter data of the set of parameter data is associated with a respective time point, at which the parameter data occurred when drawing the further drawing.

According to an embodiment of the present invention, each parameter data of the set of parameter data, which occurred during the drawing of the further drawing via the touch screen, comprises at least one of the following parameters: pressure on the touch screen, coordinates of the further drawing indicating on the predetermined image a pixel of the further drawing, speed, and/or acceleration.

According to an embodiment of the present invention, the method (particularly, the method for generating the user identifying data) further comprises determining, by use of the user identifying information, whether the further drawing matches the initial drawing and the training drawings of the set of training drawings.

According to an embodiment of the present invention, if the further drawing matches the initial drawing, the method (particularly, the method for generating the user identifying data) further comprises: adding the further drawing to the set of training drawings; and post-processing the user identifying data by use of the data on the initial drawing and by use of the data on the set of training drawings comprising the further drawing.

According to an embodiment of the present invention, the determining whether the further drawing matches the initial drawing and the training drawings of the set of training drawings further comprises: using the tolerance information of the user identifying information for determining whether or not the further drawing matches the initial drawing and the training drawings of the set of the trainings drawings; and/or executing a clustering based on the data on the initial drawing, the data on the set of training drawings, and the data on the further drawing.

According to an embodiment of the present invention, the executing of the clustering based on the data on the initial drawing, the data on the set of training drawings, and the data on the further drawing comprises: determining whether, based on the data on the further drawing, the same cluster is determined as based on the data on the initial drawing and the data on the set of training drawings; and determining that the further drawing matches the initial drawing and the training drawings of the set of training drawings if the same cluster is determined.

According to an embodiment of the present invention, the clustering is executed by applying K-means clustering.

According to an embodiment of the present invention, the using of the tolerance information of the user identifying information for determining whether or not the further drawing matches the initial drawing and the training drawings of the set of the trainings drawings comprises: determining, with regard to the further drawing, an accumulated distance of the further drawing on distances between the parameter data of the set of parameter data of the data on the initial drawing and the parameter data of the set of parameter data of the data on the further drawing, wherein the distances are determined for parameter data having corresponding time points; determining whether the accumulated distance of the further drawing is within the tolerance range indicated by the tolerance information; and determining that the further drawing matches the initial drawing and the training drawings of the set of training drawings if the accumulated distance of the further drawing is within the tolerance range.

According to an embodiment of the present invention, if the further drawing matches the initial drawing and the training drawings of the set of training drawings, the method further comprises: adding the further drawing to the set of training drawings; and post-processing the user identifying data by use of the data on the further drawing.

According to an embodiment of the present invention, the determining whether the authentication drawing matches the initial drawing and the training drawings of the set of training drawings comprises: using the tolerance information of the user identifying information for determining whether or not the authentication drawing matches the initial drawing and the training drawings of the set of the trainings drawings; and/or executing a clustering based on the data on the initial drawing, the data on the set of training drawings, and the data on the authentication drawing.

According to an embodiment of the present invention, the using of the tolerance information for determining whether or not the authentication drawing matches the initial drawing and the training drawings of the set of the trainings drawings comprises: determining, with regard to the authentication drawing, an accumulated distance of the authentication drawing on distances between parameter data of a set of parameter data of data on the initial drawing and the parameter data of the set of parameter data of the data on the authentication drawing, wherein the distances are determined for parameter data having corresponding time points; determining whether the accumulated distance of the authentication drawing is within a tolerance range indicated by the tolerance information; and determining that the authentication drawing matches the initial drawing and the training drawings of the set of training drawings if the accumulated distance of the authentication drawing is within the tolerance range.

According to an embodiment of the present invention, the executing clustering based on the data on the initial drawing, the data on the set of training drawings, and the data on the authentication drawing comprises: determining whether based on the data on the authentication drawing the same cluster is determined as based on the data on the initial drawing and the data on the set of training drawings; and determining that the authentication drawing matches the initial drawing and the training drawings of the set of training drawings if the same cluster is determined.

According to an embodiment of the present invention, the clustering is executed by applying K-means clustering.

According to an embodiment of the present invention, if the authentication drawing matches the initial drawing and the training drawings of the set of training drawings, the method (particularly the method arranged to authenticate the user) further comprises: adding the authentication drawing to the set of training drawings; and post-processing the user identifying data by use of the data on the authentication drawing.

According to an embodiment of the present invention, the method (particularly the method for generating the user identifying data) further comprises randomly generating a set of images (e.g., one or more images), wherein each one of the images of the set of images comprises at least one object randomly located on the respective image.

According to an embodiment of the present invention, the at least one object is a geometric object.

According to an embodiment of the present invention, the predetermined image is an image of the set of images selected by the user.

According to an embodiment of the present invention, the method (particularly the method for generating the user identifying data) further comprises: receiving a user input indicating a selection of an image from the set of images by the user; and using the selected image as the predetermined image.

According to an embodiment of the present invention, the randomly generating of the set of images comprises randomly generating each image of the set of images by: dividing the image into at least two image areas; and randomly distributing a predetermined number of objects in each image area of the at least two image areas.

According to an embodiment of the present invention, each object of the predetermined number of objects has a predetermined size and/or a predetermined shape.

According to an embodiment of the present invention, the randomly generating of the set of images further comprises a random placing of a further object in one image area of the at least two image areas.

According to an embodiment of the present invention, the further object has a predetermined size and/or a predetermined shape.

According to an embodiment of the present invention, the user identifying data comprises or indicates the data on the initial drawing, the data on the set of training drawings, and/or an association with the predetermined image.

According to an aspect of the present invention, a method for randomly generating one or more images (e.g., a set of images) is provided, wherein each one of the images of the set of images comprises at least one object randomly located on the respective image. The method comprises steps as indicated above and described in more detail below. According to an embodiment, from the one or more randomly generated images (e.g., from the set of images), the predetermined image used for generating the user identifying information and for authenticating the user is selected by the user. According to an embodiment, the at least one object is a geometric object. According to an embodiment, the method for randomly generating one or more images comprises: receiving a user input indicating a selection of an image from the one or more images (e.g., the set of images) by the user; and using the selected image as the predetermined image. According to an embodiment, the randomly generating of the set of images comprises randomly generating each image of the set of images by: dividing the image into at least two image areas; and randomly distributing a predetermined number of objects in each image area of the at least two image areas. According to an embodiment, each object of the predetermined number of objects has a predetermined size and/or a predetermined shape. According to an embodiment, the randomly generating of the set of images further comprises a random placing of a further object in one image area of the at least two image areas. According to an embodiment, the further object has a predetermined size and/or a predetermined shape.

According to an aspect of the present invention, a system arranged to randomly generate one or more images (e.g., a set of images) is provided, wherein the system is configured to execute steps of the method arranged to randomly generate one or more images (e.g., a set of images) as described herein.

According to an aspect of the present invention, a machine-readable medium is provided that comprises instructions stored therein, the instructions, when executed by a computer, causing the computer to perform steps of the method arranged to randomly generate one or more images (e.g., a set of images) and being configured as described herein. According to an embodiment of the present invention, the machine readable medium is a non-transitory medium.

BRIEF DESCRIPTION OF THE DRAWINGS

These and/or other aspects, features, and advantages of the invention will become apparent and will be more readily appreciated from the following description of example embodiments, taken in conjunction with the accompanying drawings of which:

Fig. 1 is a diagram illustrating an implementation of a system configured for generating user identifying data for identifying a user according to an exemplary embodiment of the present invention;
Fig. 2 illustrates steps executed at device having a touch screen according to an exemplary embodiment of the present invention;
Fig. 3a illustrates an exemplary predetermined image displayed on a touch screen according to an exemplary embodiment of the present invention;
Fig. 3b illustrates an exemplary drawing drawn by the user via the touch screen on the predetermined image according to an exemplary embodiment of the present invention;
Fig. 4 illustrates steps executed at system configured to generate user identifying data according to an exemplary embodiment of the present invention;
Fig. 5 illustrates steps executed for generating user identifying data by use of data on an initial drawing and by use of data on a set of training drawings according to an exemplary embodiment of the present invention;
Fig. 6 illustrates a determination of distances between parameters of two drawings according to an exemplary embodiment of the present invention;
Fig. 7 illustrates steps executed for post-processing the user identifying data according to an exemplary embodiment of the present invention;
Figs. 8a and 8b illustrate sub-steps of determining whether a further drawing matches the initial drawing and the training drawings of the set of training drawings by use of the user identifying information according to an exemplary embodiment of the present invention;
Fig. 9 illustrates sub-steps of determining whether a further drawing matches the initial drawing and the training drawings of the set of training drawings by use of the user identifying information according to a further exemplary embodiment of the present invention;
Fig. 10a illustrates an exemplary clustering according to an exemplary embodiment of the present invention;
Fig. 10b illustrates an exemplary appliance of the elbow method according to an exemplary embodiment of the present invention;
Fig. 11 is a diagram illustrating an implementation of a system configured for randomly generating an image for generation of user identifying data and for execution of an authentication process utilizing the user identifying data according to an exemplary embodiment of the present invention;
Fig. 12 illustrates steps executed for randomly generating an image usable for generation of user identifying data and for execution of an authentication process utilizing the user identifying data according to an exemplary embodiment of the present invention;
Figs. 13a and 13b illustrate a random generating of an image for generation of user identifying data and for execution of an authentication process utilizing the user identifying data according to the exemplary embodiment of the present invention;
Fig. 14 illustrates steps executed for randomly generating an image usable for generation of user identifying data and for execution of an authentication process utilizing the user identifying data according to a further exemplary embodiment of the present invention;
Figs. 15a to 15c illustrate a random generating of an image for generation of user identifying data and for execution of an authentication process utilizing the user identifying data according to the further exemplary embodiment of the present invention;
Fig. 16 illustrates steps for setting the predetermined image to be used for generating user identifying data and for executing of an authentication process utilizing the user identifying data according to an exemplary embodiment of the present invention;
Fig. 17 is a diagram illustrating an implementation of a system configured for authenticating a user by using a corresponding user identifying data according to an exemplary embodiment of the present invention;
Fig. 18 illustrates steps executed for authenticating a user by use of the corresponding user identifying data according to an exemplary embodiment of the present invention;
Figs. 19a and 19b illustrate sub-steps of determining whether an authentication drawing matches the initial drawing and the training drawings of the set of training drawings by use of the user identifying information according to an exemplary embodiment of the present invention; and
Fig. 20 illustrates sub-steps of determining whether an authentication drawing matches the initial drawing and the training drawings of the set of training drawings by use of the user identifying information according to a further exemplary embodiment of the present invention.

DETAILED DESCRIPTION

Hereinafter, some exemplary embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure. Generally, it has to be noted that all arrangements, devices, systems, modules, components, units, and means and so forth described herein could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Further, the method of the present invention and its various steps are embodied in the functionalities of the various described apparatus elements. Moreover, any of the embodiments and features of any of the embodiments, described herein, may be combined with each other, i.e. may supplement each other, unless a combination is explicitly excluded.

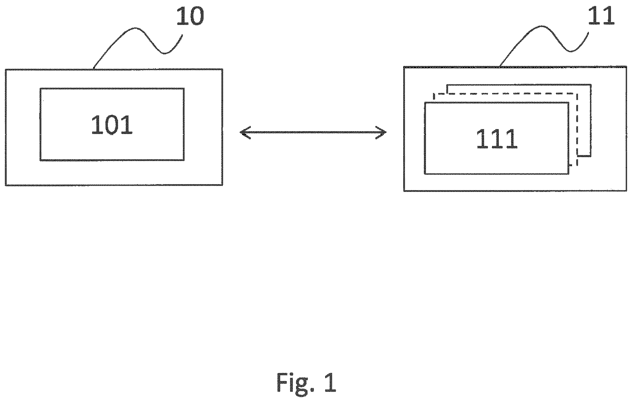

Fig. 1 illustrates an implementation of a system 11 configured for generating user identifying data according to an embodiment of the present invention. The user identifying data is data that allows an identification/authentication of a respective user or user device, with regard to which the user identifying data has been generated. On the one side, according to the embodiment of Fig. 1, a device 10 with a touch screen 101 is provided. The device 10 may be a user device such as a mobile phone, tablet, computer etc. The device 10 may be a portable device or stationary device. In general, the device 10 is arranged to receive user inputs via its touch screen 101 and to process the received user inputs. On the other side, according to the embodiment Fig. 1, the system 11 for generating the user identifying data is provided. The system 11 comprises, according to Fig. 1, one or more processing devices 111 that are arranged to execute the generating of the user identifying data as described herein. The device 10 and the system 11 are configured to communicate with each other, which is visualized in Fig. 1 by the arrow between the device 10 and the system 11. The communication between the device 10 and the system 11 can be arranged in different appropriate ways. For example, the communication may be done via a wired or wireless communication connection. For example, the device 10 is arranged to provide/transmit data on user inputs, made by a user (e.g., via touch screen 101), to the system 11, while the system 11 is arranged to generate user identifying data for the user based on the user inputs. The generated user identifying data is arranged for the authentication of the user. The system 11 is, for example, configured to send to the device 10 requests for user inputs, commands to be executed by the device 10, and/or signals confirming or not-confirming data received by the system 11 from the device 10. Generally, different kinds or information or data may be exchanged between the device 10 and the system 11. Further, according to an embodiment, the device 10 and/or the system 11 comprises one or more corresponding communication units (not shown in Fig. 1) that are configured to execute the respective data, information, and/or signal communication.

Further, the system 11 may be separate from the device 10, may overlap with the device 10 (i.e. one or more components of the system 11 may be a part of the device 10, and/or one or more steps executed by the system 11 may be executed at the device 10), or may be implemented within the device 10.

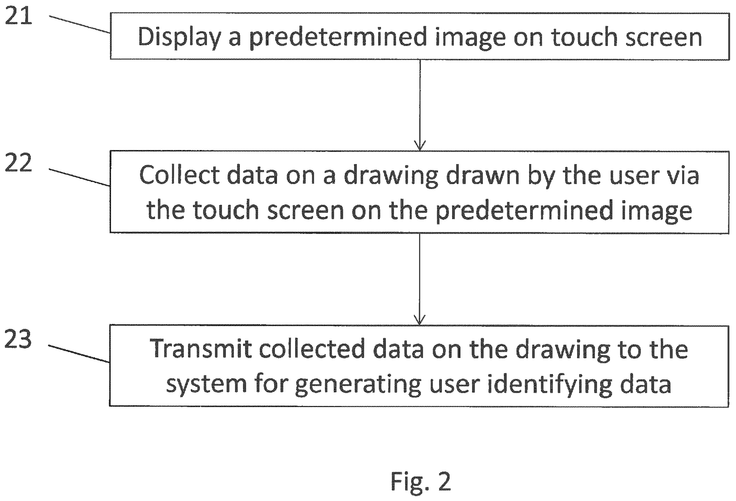

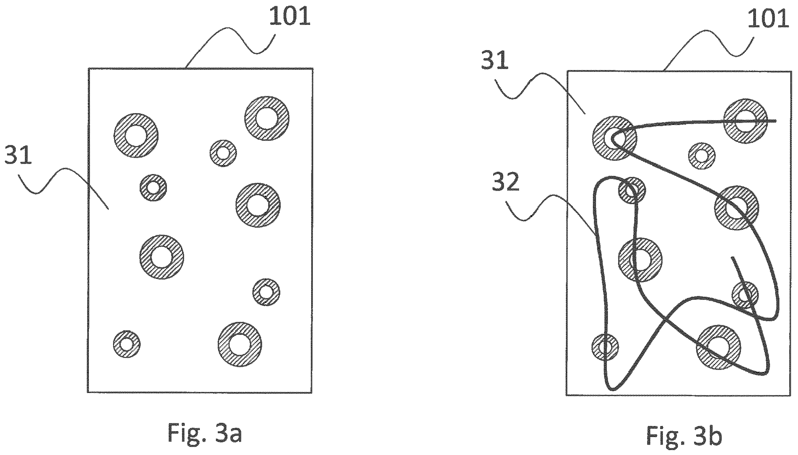

Fig. 2 illustrates steps executed at device 10 according to an exemplary embodiment of the present invention with regard to the generation of the user identifying information. According to the embodiment of Fig. 2, device 10 is configured to display 21 a predetermined image on its touch screen 101. The predetermined image comprises, for example, one or more objects, e.g., one or more geometrical objects. However, the present invention is not restricted to a particular kind of objects present in the predetermined image. Fig. 3a illustrates an exemplary predetermined image 31 with a plurality of objects (see the shaded rings in Fig. 3a) displayed on the touch screen 101. According to an embodiment, the device 10 prompts the user to draw a drawing on the predetermined image 31. This may be executed by any appropriate user interface. For example, the device 10 displays a corresponding window or notice (e.g., on touch screen 101) informing the user that the user may now draw a drawing via the touch screen 101. The user draws a drawing on the predetermined image 31 via the touch screen 101. The user may draw the drawing on the touch screen 101 as generally known, e.g. by use of one or more fingers or by use of a stylus. Fig. 3b illustrates an exemplary drawing 32 drawn by the user via the touch screen 101 on the predetermined image 31 according to an exemplary embodiment of the present invention. In the embodiment of Fig. 3b, the drawing 32 comprises a line drawn between, through and around the objects of the predetermined image 31. The drawings 32, drawn by a user, are however not restricted to one line only. Generally, a drawing 32 may comprise different objects drawn by the user on the predetermined image 31 via the touch screen 101. The objects of the predetermined image 31 (see in Figs. 3a and 3b the shaded rings) serve as orientation points, with regard to which the user draws its drawing 32 and allow the user to remember and replicate its drawing 32 when executing the authentication. From the view point of the user, the drawing 32 represents a password which is to be entered for the purpose of authentication. Thus, when the authentication is executed, the objects of the predetermined image 31 simplify the authentication process in that the user may better remember and replicate the drawing 32 required for the authentication. When the generation of the user identifying data is executed, a similar effect arises - the objects of the predetermined image 31 simplify the user identifying information generation process in that they represent guides that allow the user to remember drawing 32 drawn by the user on the touch screen 101. On the other side, the respective user identifying data will be at least associated with the predetermined image 31 because the corresponding authentication process will be executed by using the predetermined image 32.

In step 22, when the user draws the drawing 32 on the touch screen 101, the device 10 collects data on the drawing 32. The collected data comprises, for example, with regard to a drawing time spent by the user to draw drawing 32, a set of parameter data $P$ $\{p_1, ..., p_n\}$ that occurred during the drawing of the drawing 32 via the touch screen 101, wherein n is a positive integer (n $\geq$ 1). Each parameter data $p_k$ $(k = 1, ..., n)$ of the *set P* of parameter data is associated with a respective time point $t_k$, at which the parameter data $p_k$ occurred when drawing the initial drawing. The time point $t_k$ may be seen also as a time stamp of the occurrence of parameter data $p_k$. The parameter *data* $p_k$ occurs (i.e. is detected, sensed and/or measured) during the drawing of the drawing 32 by the interaction of user (i.e. user's finger or stylus) with the touch screen 101. The parameter data $p_k$ occurs (i.e. is detected, sensed and/or measured) at the device 10, i.e. at the touch screen 101. Particularly, when the user touches the touch screen 101 of the device 10, the device 10 takes a sample with regard to a position of the finger or stylus on the touch screen 101 of the device 10 and, thus, on the predetermined image 31. The sample provides corresponding parameter data occurred at the respective time point, at which the sample has been taken. According to an embodiment, the samples are taken by the device 10 at a particular rate. Thus, according to the embodiment, the time points are equally or at least equally spaced, which enables a consistent acquiring or recording of parameter data $p_k$ and, thus, ensures a more reliable generation of user identifying data as well as more reliable authentication.

Generally, parameter *data* $p_1$ is considered as being occurred at time point $t_1$, parameter data $p_2$ is considered as being occurred at time point $t_2$, ..., and parameter data $p_n$ is considered as being occurred at time point $t_n$. Each parameter data $p_k$ comprises at least one parameter that occurred at the respective time point $t_k$ during the drawing of drawing 32 by the user on touch screen 101. Particularly, each parameter data $p_k$ comprises at least one of the following parameters: pressure on the touch screen 101, coordinates of the drawing 32 (e.g., x- and y-coordinates) indicating on the predetermined image 31 a pixel that was drawn at the respective time point $t_k$ for drawing the drawing 32 indicating a drawn pixel (i.e. spatial coordinate pairs of a user touch point), speed, and/or acceleration. Thus, parameter data $p_k$ may be considered as a set of individual parameters $p_{k,i}$, where $i$ is a positive integer (i.e. $i \geq 1$) and indicates a respective parameter of the parameter data $p_k$.

If parameter data $p_k$ comprises as one of its parameters $p_{k,i}$ a pressure on the touch screen 101, the pressure indicates a pressure that the user applied on the touch screen 101 at time point $t_k$ during the drawing of the drawing 32. If parameter data $p_k$ comprises as one of its parameters $p_{k,i}$ coordinates of drawing 32 (e.g., x- and y-coordinates) indicating on the predetermined image 31 a pixel that was drawn at the respective time point $t_k$ for drawing the drawing 32 (i.e. spatial coordinate pairs of a user touch point), the coordinates indicates coordinates of the user touch point at time point $t_k$ during the drawing of the drawing 32. If parameter data $p_k$ comprises as one of its parameters $p_{k,i}$ speed, the speed indicates speed applied by the user on the touch screen 101 at time point $t_k$ during the drawing of the drawing 32. If parameter data $p_k$ comprises as one of its parameters $p_{k,i}$ acceleration, the acceleration indicates acceleration applied by the user on the touch screen 101 at time point $t_k$ during the drawing of the drawing 32.

According to an embodiment, the device 10 comprises one or more storage units arranged to store (e.g., temporarily) the collected data on the drawing 32. According to an embodiment, the device 10 comprises one or more processing units arranged to execute the steps of Fig. 2.

In step 23, device 10 transmits the data collected on the drawing 32 to the system 11. According to an embodiment, the device 10 comprises one or more corresponding communication units arranged to transmit the data collected on the drawing 32 to the system 11. For example, the device 10 transmits the data collected on the drawing 32 to the system 11 after the user has finished the drawing of the drawing 32.

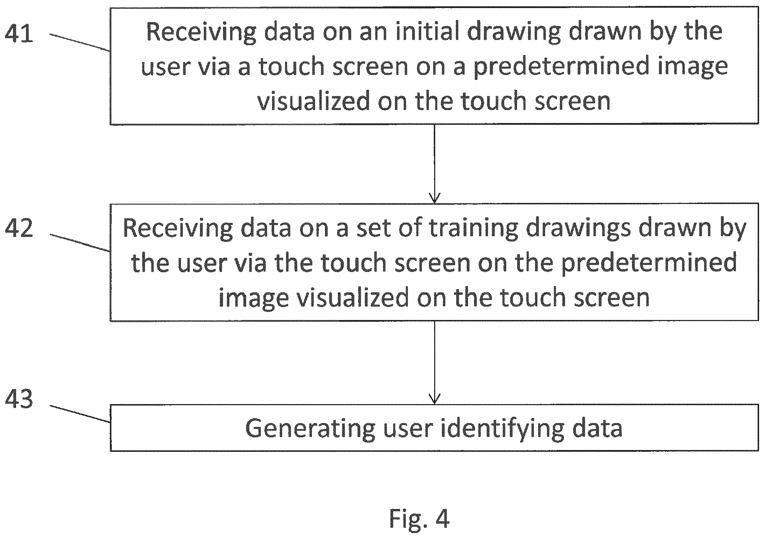

Fig. 4 illustrates steps executed at system 11 configured to generate user identifying data according to an exemplary embodiment of the present invention. When starting the generating of the user identifying data, the predetermined image 31 is displayed 21 on the touch screen 101 of the device 10. The user draws then an initial drawing 32 on the touch screen 101, which is used as a basis for the generation of the user identifying data. To the user, the initial drawing 32 represents a password that the user intends to use for the authentication process. During the drawing of the initial drawing 32, data on the initial drawing 32 is collected 22 by the device 10. When the drawing of the initial drawing 32 has been finished, the data on the initial drawing 32, as collected at the device 10, is transmitted to the system 11. Thus, the system 11 receives 41 the data on the initial drawing 32, wherein the data is arranged as explained above with regard to Figs. 2, 3a, and 3b. According to an embodiment, one or more communication units of the system 11 are configured to execute the data reception step 41.

In step 42, the system 11 receives data on a set of training drawings drawn by the user via the touch screen 101 on the predetermined image 31 visualized on the touch screen 101. To the user, the training drawings have been drawn to exercise and remember the password, i.e. the initial drawing. The device 10 executes steps shown in Fig. 2 and described above to generate the training drawings. For example, the device 10 executes steps of Fig. 2 until a predetermined number of training drawings has been generated. According to one embodiment, the device 10 transmits 23 data on each training drawing 32 to the system 11 directly after the drawing of the respective training drawing 32 has been finished by the user. According to another embodiment, the device 10 at first collects 22 data on all training drawings 32 of the set of training drawings and then, after the drawing of all training drawings 32 of the set of training drawings has been finished by the user, transmits the collected 22 data on all training drawings 32 to the system 11.

In step 43, the system 11 generates the user identifying data with regard to the user that drew the initial drawing 32 and the set of training drawings 32. While the user considers the initial drawing 32 to be input as a password for the authentication purpose, the system 11 as well as the authentication process consider the user identifying data as the data to be verified during the authentication of the user.

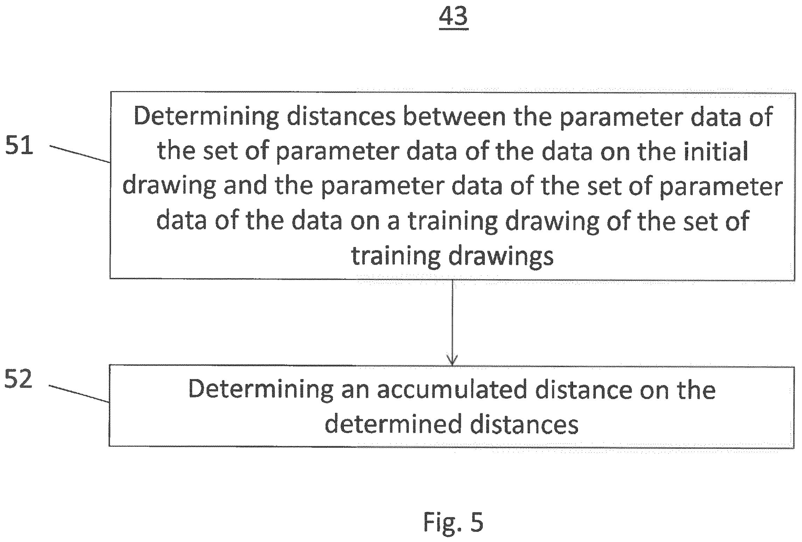

Fig. 5 illustrates sub-steps of step 43 executed by the system 11. Steps of Fig. 5 are executed with regard to each training drawing 32 of the set of training drawings.

In step 51, the system 11 determines distances between the parameter data of the set of parameter data of the data on the initial drawing 32 and the parameter data of the set of parameter data of the data on the corresponding training drawing 32 of the set of training drawings currently considered. Thus, in step 51, the set of parameter data on the initial drawing 32 $P^I = \{p_1^I, p_2^I, ..., p_n^I\}$ and the set of parameter data on the corresponding training drawing 32 $P^T = \{p_1^T, p_2^T, ..., p_n^T\}$ are compared, wherein $p_1^I, p_2^I, ..., p_n^I$ represent parameter data that occurred at time points $t_1$, $t_2$, ..., $t_n$ during the drawing of the initial drawing 32, and wherein $p_1^T, p_2^T, ..., p_n^T$ represent parameter data that occurred at time points $t_1$, $t_2$, ..., $t_n$ during the drawing of the corresponding training drawing 32.

As mentioned above, each parameter data $p_k^I$ of the set $P^I$ of parameter data of the initial drawing 32 is associated with the respective time point $t_k$ and comprises at least one particular parameter $p_{k,i}^I$, and each parameter data $p_k^T$ of the set $P^T$ of parameter data of the corresponding training drawing 32 is associated with the respective time point $t_k$ and comprises at least one particular parameter $p_{k,i}^T$. Correspondingly, each parameter $p_{k,i}^I$, $p_{k,i}^T$ is associated with the respective time point $t_k$ and represents a value of one of the following: pressure on the touch screen 101, coordinates of the initial drawing indicating on the predetermined image 31 a drawn pixel (i.e. spatial coordinate pairs of a user touch point, e.g. x- and y-coordinates), speed, and/or acceleration.

The determining of the distances of step 51 means determining distances of the respective parameters $p_{k,i}^I$, $p_{k,i}^T$ being associated with the same time point $t_k$ and belonging to the same parameter kind (e.g., pressure, coordinates, speed, acceleration), i.e. expressing the same measure. I.e. particularly at least one of the following is executed:

- Distances between parameters $p_{k,i}^I$ of the initial drawing 32 and parameters $p_{k,i}^T$ of the corresponding training drawing 32, which are associated with the same time point $t_k$ and which express pressure on touch screen 101, are determined;

- Distances between parameters $p_{k,i}^I$ of the initial drawing 32 and parameters $p_{k,i}^T$ of the corresponding training drawing 32, which are associated with the same time point $t_k$ and which express coordinates of the drawings 32 (i.e. initial drawing 32 of corresponding training drawing 32) indicating on the predetermined image 31 a drawn pixel (i.e. spatial coordinate pairs of a user touch point, e.g., x- and y-coordinates), are determined;

- Distances between parameters $p_{k,i}^I$ of the initial drawing 32 and parameters $p_{k,i}^T$ of the corresponding training drawing 32, which are associated with the same time point $t_k$ and which express speed, are determined;

- Distances between parameters $p_{k,i}^I$ of the initial drawing 32 and parameters $p_{k,i}^T$ of the corresponding training drawing 32, which are associated with the same time point $t_k$ and which express acceleration, are determined.

Thus, the distances are determined according to the respective time points $t_k$ (e.g., time stamps) and with regard to the respective particular parameter or kind of parameter of the parameter data $p_k$.

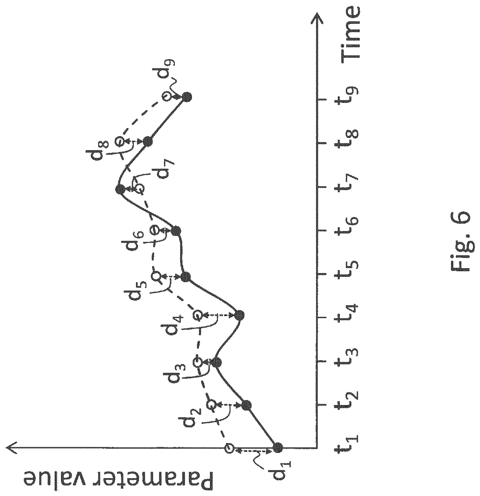

Fig. 6 visualizes exemplary a determination 51 of distances $d_1$ to $d_9$ between values of a corresponding parameter $p_{k,i}^I$, $p_{k,i}^T$ (e.g., pressure on touch screen 101, coordinates of drawings 32 indicating on the predetermined image 31 a drawn pixel (i.e. spatial coordinate pairs of a user touch point, e.g., x- and y-coordinates), speed, or acceleration) of two drawings 32 at respective time points $t_1$ to $t_9$. In Fig. 6, the solid line represents exemplary the development of values or a particular parameter $p_{k,i}^I$ of the initial drawing 32 along the time points t1 to t9 of the drawing time, during which the user drew the initial drawing 32 and at which the samples have been taken by the device 10. The dotted line of Fig. 6 represents exemplary the development of values of a particular parameter $p_{k,i}^T$ of the corresponding training drawing 32 along the time points t1 to t9 of the drawing time, during which the user drew the corresponding training drawing 32 and at which the samples have been taken by the device 10.

In step 52, an accumulated distance is determined with regard to the respective parameter $p_{k,i}^I$, $p_{k,i}^T$. In the embodiment of Fig. 6, the accumulated distance is determined with regard to the determined 51 distances $d_1$ to $d_9$. Particularly, the accumulated distance is determined as a sum of the distances $d_1$ to $d_9$, i.e. is equal $d_1 + d_2 + ... + d_9$.

Thus, if parameter data of the set of parameter data comprises more than one particular parameter (e.g., pressure on the touch screen 101, coordinates of a drawing indicating on the predetermined image 31 a drawn pixel (i.e. spatial coordinate pairs of a user touch point), speed, and/or acceleration, e.g., x- and y-coordinates), with regard to each one of the particular parameters a corresponding accumulated distance is determined 52.

For example, if the set of training drawings comprises ten training drawings 32, the accumulated distances determined 52 with regard to each one of the ten training drawings 32 and with regard to any parameter of the parameter data, could be as follows:

| Comparisons | Accumulated distance determined 52 with regard to a parameter |
| --- | --- |
| 1st training drawing compared with the initial drawing | 3 |
| 2nd training drawing compared with the initial drawing | 12 |
| 3rd training drawing compared with the initial drawing | 8 |
| 4th training drawing compared with the initial drawing | 6 |
| 5th training drawing compared with the initial drawing | 5 |
| 6th training drawing compared with the initial drawing | 7 |
| 7th training drawing compared with the initial drawing | 10 |
| 8th training drawing compared with the initial drawing | 5 |
| 9th training drawing compared with the initial drawing | 6 |
| 10th training drawing compared with the initial drawing | 5 |

The accumulated distances determined with regard to the initial drawing 32 and each training drawing 32 of the set of training drawings show how similar or dissimilar each training drawing 32 from the initial drawing 32 is.

According to an embodiment, the user identifying data comprises tolerance information for determining whether or not another drawing 32, drawn by the user via the touch screen 101 on the predetermined image 31, matches the initial drawing 32 and the training drawings 32 of the set of the training drawings. Thus, the generating 43 of the user identifying data comprises determining the tolerance information. The tolerance information determined 43 indicates a tolerance information with regard to at least one parameter occurring when drawing on the touch screen 101. Thus, if parameter data $pk$ of a parameter set $P$ comprises data on more than one parameter $p_{k,i}$, i.e. if $i$ is larger than one, a corresponding set of tolerances $tv_i$ is determined as the tolerance information, wherein each tolerance $tv_i$ is determined with regard to a corresponding particular parameter $p_{k,i}$. As mentioned above, parameter data $p_k$ comprises, for example, at least one of the following particular parameters: pressure on the touch screen 101, coordinates of the drawing 32 indicating on the predetermined image 31 a drawn pixel (i.e. spatial coordinate pairs of a user touch point), speed, and/or acceleration. Thus, the tolerance information will comprise a set of tolerances $tv_i$ with at least one of the following: a tolerance with regard to pressure on touch screen 101, a tolerance with regard to coordinates of the drawing 32 indicating on the predetermined image 31 a drawn pixel (i.e. spatial coordinate pairs of a user touch point), a tolerance with regard to speed, and/or a tolerance with regard to acceleration. However, if parameter data $p_k$ of a parameter set $P$ comprises data on one particular parameter $p_{k,i}$ only, only one corresponding tolerance will be determined in step 43 as the tolerance information.

This determining of the tolerance information with one or more corresponding tolerances $tv_i$ comprises the above-described steps 51 and 52, execution of which result in the corresponding accumulated distances. The accumulated distances show how similar or dissimilar each training drawing 32 from the initial drawing 32 is. For determining the required tolerance(s) the question of how spread out each training drawing 32 or more precisely the variance of the training drawings 32 is should be answered.

According to an embodiment, the determining of the tolerance information comprises determining a standard deviation from the mean of the accumulated distances of the training drawings 32 of the set of training drawings. The mean of the accumulated distances and the standard deviation are calculated to determine how spread out the accumulated distances are. For the calculation of the standard deviation, any one of the generally known deviation calculation formulas may be used. Here, it should be clear that the respective determination and calculation steps are executed with regard to each kind of particular parameters of parameter data (i.e. pressure on touch screen 101, coordinates of the drawing 32 indicating on the predetermined image 31 a drawn pixel (i.e. spatial coordinate pairs of a user touch point), speed, and/or acceleration, e.g., x- and y-coordinates) and the corresponding accumulated distances.

When considering exemplary the accumulated distances provided in the table above, the mean of the accumulated distances is 6.7 and the standard deviation is 2.53179778023. Thus, the mean or the average of the accumulated distances of the above-provided table is 6.7, and the standard deviation of approximately 2.53.

According to the embodiment, the tolerance information indicates a tolerance range of allowable accumulated distances. Thus, if parameter data $p_k$ of a parameter set P comprises data on more than one parameter $p_{k,i}$, i.e. if $i$ is larger than one, each tolerance $tv_i$ for the respective parameter $p_{k,i}$ will indicate a corresponding tolerance range for the respective parameter $p_{k,i}$. Thus, a tolerance range for pressure, a tolerance range for coordinates, a tolerance range for speed, and/or a tolerance range for acceleration will be determined 52. Correspondingly, if parameter data $p_k$ of a parameter set P comprises data on one parameter $p_{k,i}$ only, only one corresponding tolerance range will be determined 52.

According to an embodiment, lower bound of the tolerance range is determined by subtracting the standard deviation from the mean of accumulated distances. When turning back to the above-provided exemplary table, the lower bound of the tolerance range will be 6.7 - 2.35 = 4.17.

According to an embodiment, upper bound of the tolerance range is determined by adding the standard deviation and the mean of accumulated distances. When turning back to the above-provided exemplary table, the upper bound of the tolerance range will be 6.7 + 2.35 = 9.23.

Thus, with regard to the above-provided exemplary table, the tolerance range of the user identifying information will be from 4.17 to 9.23, meaning that a drawing 32, drawn by the user on the predetermined image 31 via the touch screen 101, will be recognized as matching the initial drawing 32 and/or at least one of the training drawings 32 if the accumulated distance, determined with regard to the drawing 32 as discussed above, is within the tolerance range.

In an embodiment, it is assumed that, given a normal distribution, approximately 68% of all values should fall within one standard deviation of the mean. This is true also with regard to the above-provided exemplary table. The accumulated distances of 3, 12, and 10 land outside of the tolerance range. The remaining seven values 8, 6, 5, 7, 5, 6, and 5 land within the tolerance range.

Thus, by the initial drawing 32 and the set of test drawings, secure user identifying data comprising or indicating one or more corresponding tolerance ranges (each for a particular parameter kind of the parameter data) is determined.

With regard to the determining 52 of the respective accumulated distances, it has to be noted that the speed applied for drawing the initial drawing 32 and the test drawings 32 of the set of test drawings may vary.

Thus, the drawing of the initial drawing 32 may have a drawing time that is different from the drawing time of a test drawing 32. Also between the test drawings 32 the drawing time may vary. When the user touches the touch screen 101 of the device 10, the device 10 takes a sample with regard to a position of the finger or stylus on the touch screen of the device 10 and, thus, on the predetermined image 31. The sample provides corresponding parameter data obtained at a time point, at which the sample has been taken. If a drawing 32 is drawn faster, less samples will be collected by the device 10. If a drawing 32 is drawn slower, more samples will be collected by the device 10. In this way, a line showing the development of values of a particular parameter $p_{k,i}^I$ of the initial drawing 32 (see the solid line in Fig. 6) may have a different length that a line showing the development of values of a particular parameter $p_{k,i}^T$ of the corresponding training drawing 32 (see the dotted line in Fig. 6). To compensate the speed variance and, thus, the variance of number of samples taken by the device 10, dynamic time warping (DTW) is applied, according to an embodiment, for determining 51 the distances and for determining 52 the corresponding accumulated distance. The DTW is a method for measuring similarity between two temporal sequences, which may vary in speed. Herein, the DTW is used to measure the similarity between the developments of parameters of parameter data of the initial drawing and the test drawing(s). The implementation of the DTW is generally well known, which is why it will not be explained in more detail herein. Generally, the present invention is not restricted to the use of the DTW only, also further appropriate methods for measuring similarity between two temporal sequences, which may vary in speed, may be applied instead or additionally.

As to the user identifying information generated as described above, the user identifying information comprises the tolerance information. Further, according to an embodiment, the user identifying information comprises or is associated with the data on the initial drawing 32, the data on the set of training drawings, and/or the predetermined image 31.

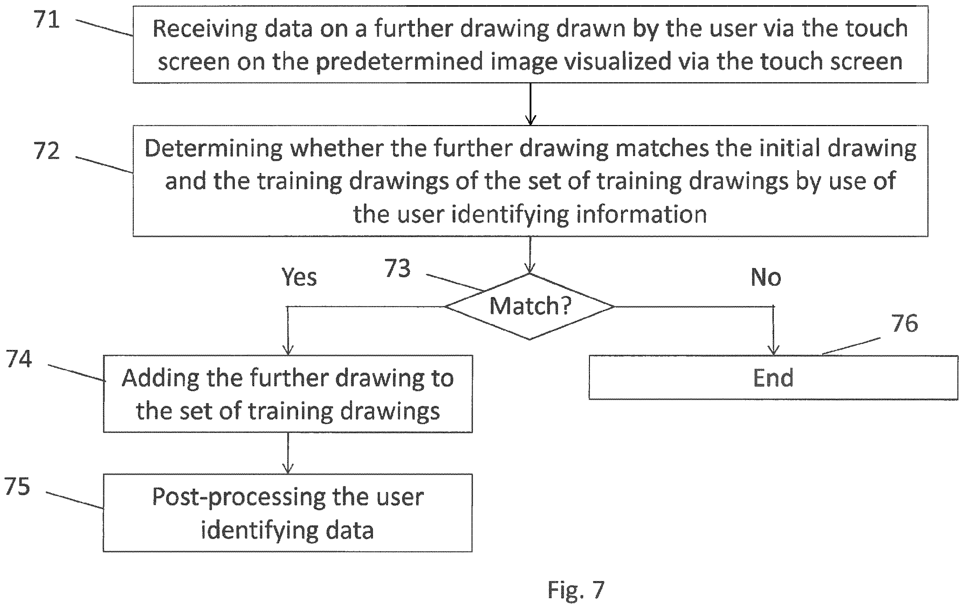

Fig. 7 illustrates steps executed for post-processing the user identifying data according to an exemplary embodiment of the present invention. The steps, executed according to Fig. 7, may be executed by the system 11 configured for generating user identifying data and described above and/or by another system such as a system for authenticating the user. In any case, by executing the steps of Fig. 7 the quality of the user identifying data is improved, which improves the security when the user identifying data is used for authentication purposes.

According to the embodiment of Fig. 7, data on a further drawing 32, drawn by the user via a touch screen 101 on the predetermined image 31 visualized on the touch screen 101, is received in step 71. For example, prior to the execution of step 71, steps as shown in and described with regard to Fig. 2 are executed with regard to the drawing of the further drawing 32. The data on the further drawing 32 are arranged in the same way as described above with regard to Figs. 2, 3a, and 3b. In step 72, the user identifying information is used to determine whether the further drawing 32 matches the initial drawing 32 and the training drawings 32 of the set of training drawings. If a match is present 73, the further drawing 32 is added 74 to the set of training drawings, and the user identifying data is post-processed 75 accordingly. If no match is present 73, the procedure of post-processing the user identifying data with regard to the further drawing 32 ends 76.

The step of post-processing 75 of the user identifying data comprises the execution of step 43, described above with regard to Figs. 4 to 6. The execution of the steps of Figs. 4 to 6 with regard to the further drawing 32 means that in said Figs. 4 to 6 the further drawing 32 is handled as a training drawing 32. Since the set of training drawings comprises now additionally the further drawing 32, the user identifying data is updated with regard to the further drawing 32. In this way, more information is taken into account for generating the user identifying data, which improves the quality of the user identifying information and the security of the authentication process using the user identifying information.

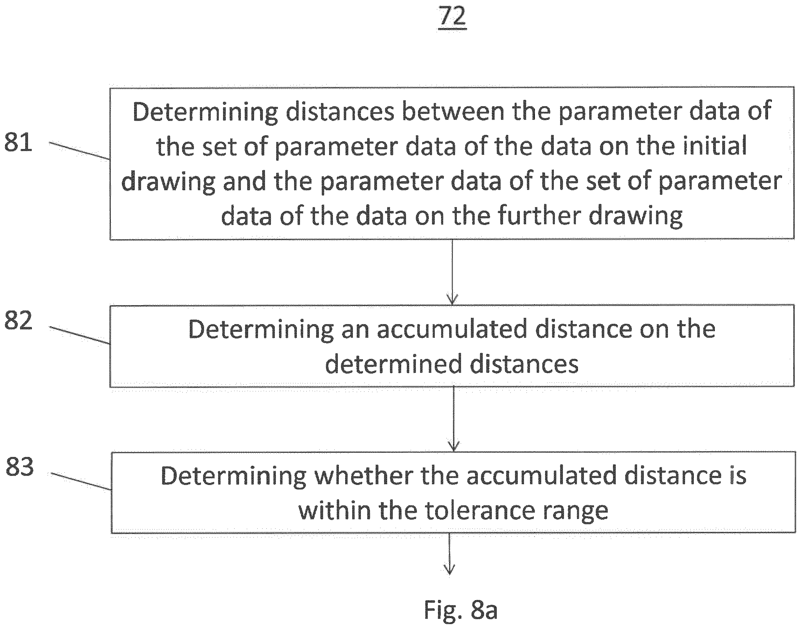

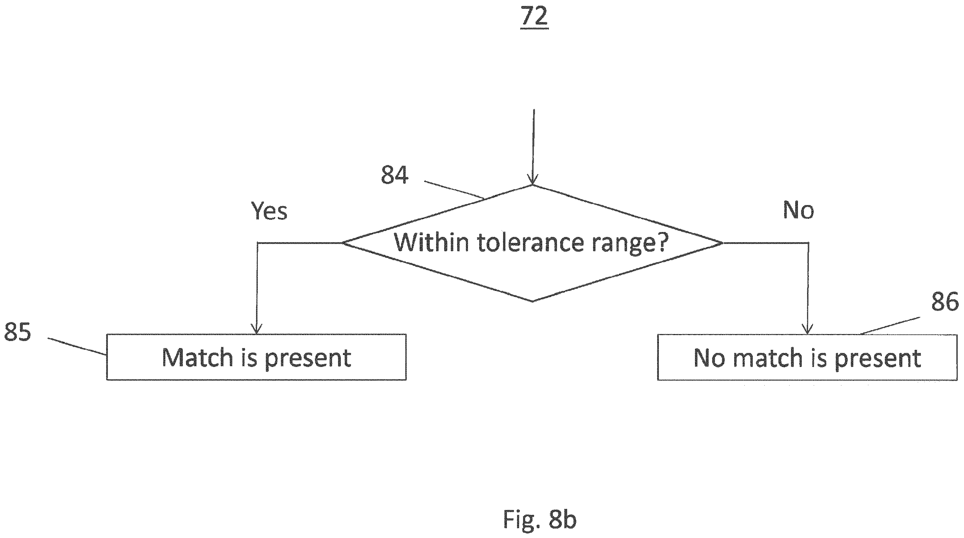

Figs. 8a and 8b illustrate sub-steps of determining whether a further drawing 32 matches the initial drawing 32 and the training drawings 32 of the set of training drawings by use of the user identifying information. According to the embodiment of Figs. 8a ad 8b, at first, distances between the parameter data $p_1^I, p_2^I, ..., p_n^I$ of the set of parameter data on the initial drawing 32 $P^I = \{p_1^I, p_2^I, ..., p_n^I\}$ and the parameter data $p_1^F, p_2^F, ..., p_n^F$ of the set of parameter data on the further drawing 32 $P^F = \{p_1^F, p_2^F, ..., p_n^F\}$ are determined. This step is executed in the same way as described above with regard to step 51 of Fig. 5 with the only difference that instead of a training drawing 32 the further drawing 32 is considered. Thus, when executing step 81 as described with regard to step 51 of Fig. 5, the set of parameter data of the further drawing 32 $P^F = \{p_1^F, p_2^F, ..., p_n^F\}$ replaces the set of parameter data of the training drawing 32 $P^T = \{p_1^T, p_2^T, ..., p_n^T\}$.

In step 82, an accumulated distance on the distances determined in step 81 is determined, which is executed as described above with regard to step 52 of Fig. 5. Since parameter data $p_1^I, p_2^I, ..., p_n^I$ and $p_1^F, p_2^F, ..., p_n^F$ may comprise different kinds of parameters or particular parameters respectively (e.g., pressure on touch screen 101, coordinates of the drawing 32 indicating on the predetermined image 31 a drawn pixel (i.e. spatial coordinate pairs of a user touch point, e.g., x- and y- coordinates), speed, and/or acceleration), also in step 82 with regard to each particular parameter $p_{k,i}^I$, $p_{k,i}^F$, i.e. with regard to each kind of parameters a corresponding accumulated distance is determined.

In step 83, it is determined whether the accumulated distance is within the corresponding tolerance range of the user identifying information. Here, if more than one kind of parameters or particular parameters are present in the parameter data, with regard to each accumulated distance determined for a particular parameter it is determined in step 83 whether the accumulated distance is within the respective tolerance range of the user identifying information. For example, if the parameter data $p_1^I, p_2^I, ..., p_n^I$ and $p_1^F, p_2^F, ..., p_n^F$ comprise the pressure parameter, in step 83 it is determined whether the accumulated distance determined with regard to the pressure parameter is within the respective tolerance range for the pressure parameter. If the parameter data $p_1^I, p_2^I, ..., p_n^I$ and $p_1^F, p_2^F, ..., p_n^F$ comprise the coordinate parameter, in step 83 it is determined whether the accumulated distance determined with regard to the coordinate parameter is within the respective tolerance range for the coordinate parameter. Further, if the parameter data $p_1^I, p_2^I, ..., p_n^I$ and $p_1^F, p_2^F, ..., p_n^F$ comprise the speed parameter, in step 83 it is determined whether the accumulated distance determined with regard to the speed parameter is within the respective tolerance range for the speed parameter.

If the parameter data $p_1^I, p_2^I, ..., p_n^I$ and $p_1^F, p_2^F, ..., p_n^F$ in turn comprise the acceleration parameter, in step 83 it is determined whether the accumulated distance determined with regard to the acceleration parameter is within the respective tolerance range for the acceleration parameter.

In case, the accumulated distance is within the respective tolerance range 84, it is determined 85 that a match is present, i.e. that the further drawing 32 matches the initial drawing and the test drawings 32 of the set of test drawings. In case, the accumulated distance is not within the tolerance range 84, it is determined 86 that no match is present, i.e. that the further drawing 32 does not match the initial drawing and the test drawings 32 of the set of test drawings.

Since more than one kind of parameters (e.g., pressure, coordinates, speed, and/or acceleration) or particular parameters respectively may be present in the parameter data, steps 83 to 86 will be executed with regard to each accumulated distance determined for a particular parameter. According to an embodiment, a presence of a match will be acknowledged 85, 73 to 75 with regard to the further drawing 32, if, for each one of the particular parameters (e.g., pressure, coordinates, speed, and/or acceleration), the corresponding accumulated distance is within the respective tolerance range. According to another embodiments, (e.g., when the sensitivity of data, protected by the user identifying information, is not very high) it may be sufficient if, for a predetermined percentage of the particular parameters, the corresponding accumulated distances are within the respective tolerance ranges or if, with regard to each one of predetermined particular parameters, the corresponding accumulated distance is within the respective tolerance range. Thus, a match will be acknowledged 85, 73 to 75 with regard to the further drawing 32, if a predetermined percentage of accumulated distances is within the respective tolerance range or if each one of predetermined particular accumulated distances is within the respective tolerance range.

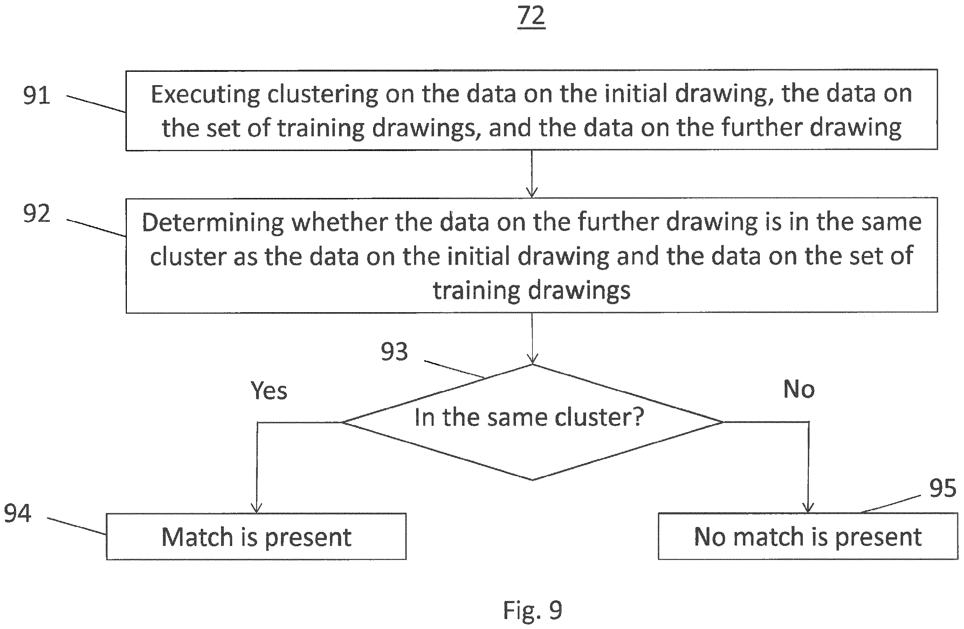

Fig. 9 illustrates sub-steps of determining whether a further drawing 32 matches the initial drawing 32 and the training drawings 32 of the set of training drawings by use of the user identifying information according to a further exemplary embodiment of the present invention. In step 91, a clustering on the data on the initial drawing 32, the data on the set of training drawings, and the data on the further drawing 32 is executed. Here, particularly, the corresponding sets of parameter data $P^I = \{p_1^I, p_2^I, ..., p_n^I\}$ of the initial drawing 32, of parameter data $P^T = \{p_1^T, p_2^T, ..., p_n^T\}$ of the test drawings 32 of the set of test drawings, of parameter data $P^F = \{p_1^F, p_2^F, ..., p_n^F\}$ of the further drawing 32 and/or the corresponding accumulated distances determined with regard to the initial drawing 32, the test drawings 32 of the set of test drawings, and the further drawing 32 are taken into consideration. Thus, the clustering is executed, for example, with regard to average values of one or more particular parameters of the parameter data of the drawings 32 and/or with regard to accumulated distances determined with regard to one or more particular parameters of the parameter data of the drawings 32. As to the initial drawing 32 and the test drawings 32, their belonging to the corresponding user is already known. I.e., it is known that the initial drawing 32 and the test drawings 32 are associated with the corresponding user, i.e. identify the user. With regard to the further drawing 32, it has to be found out whether it can be seen as associated with or identifying the same user as the initial drawing 32 and the test drawings 32. This is accomplished by executing the clustering 91.

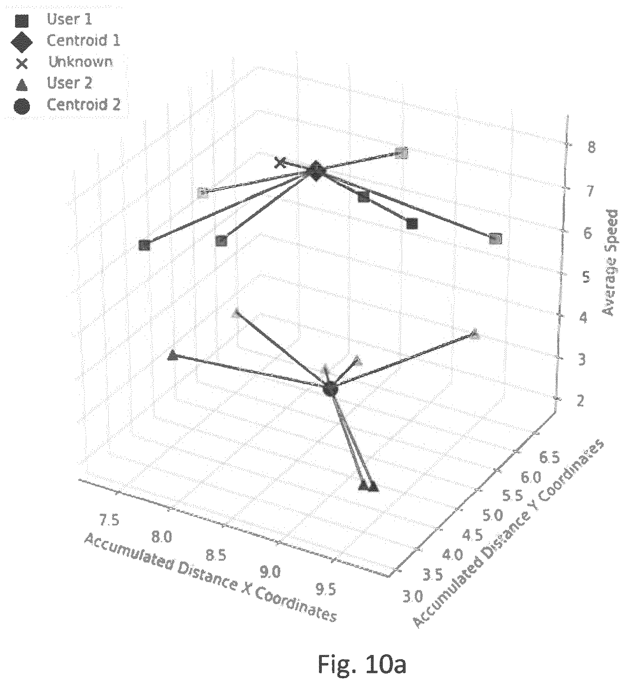

Fig. 10a illustrates an exemplary clustering according to an exemplary embodiment of the present invention. In the embodiment of Fig. 10a, the clustering 91 is executed with regard to accumulated distance values for x coordinates, accumulated distance values of y coordinates, and average speed. Thus, each drawing 32 is represented by its accumulated distance value for x coordinates, its accumulated distance value of y coordinates, and its average speed (average of the speed parameter values in the corresponding set of parameter data). Fig. 10a visualizes that, by the clustering, it may be easily distinguished between different users. While the upper cluster represents drawings associated with a particular "user 1", the bottom cluster represents drawings associated with a particular "user 2".

Thus, when executing a corresponding clustering, the data on the initial drawing 32 and the test drawings 32 will be clustered in the same cluster, i.e. assigned to the same user. In step 92, it is then determined whether or not also the further drawing 32 is assigned to this cluster in view of its data. If the further drawing 32 is assigned to the same cluster 93 as the initial drawing 32 and the test drawings 32, it is determined 94 that the further drawing 32 matches the initial drawing 32 and the training drawings 32, i.e. that the further drawing 32 is associated with and identifies the same user. Otherwise, if the further drawing 32 is not assigned to the same cluster 93 as the initial drawing 32 and the test drawings 32, it is determined 95 that the further drawing 32 does not match the initial drawing 32 and the training drawings 32, i.e. that the further drawing 32 is not associated with and does not identify the same user.

According to an embodiment, the clustering in step 91 is executed by applying K-means clustering. The method of the K-means clustering is generally known. According to an embodiment, the following steps are executed when the K-means clustering is applied in step 91:

- Randomly choosing K amount of points called centroids in N-dimensions. In the embodiment of Fig. 10a two centroids ("Centroid 1" and "Centroid 2") have been chosen in three dimensions, each of the dimensions referring to respective data on drawings 32 to be used for clustering. Particularly, as mentioned above, the three dimensions refer exemplary to accumulated distances of x-coordinates, accumulated distances of y-coordinates, and average speed.

- Placing the K centroids in a randomly chosen place within the N-dimensional space.
- Calculating the Euclidean distance of each point from each centroid and grouping the points to a centroid whose Euclidean distance is the smallest.
- Repeating the Euclidian distance calculating step until all points have been grouped to K amount of centroids.
- Calculating the average distance of the grouped points from its centroid.
- Repeat the above steps until the average distance normalizes.

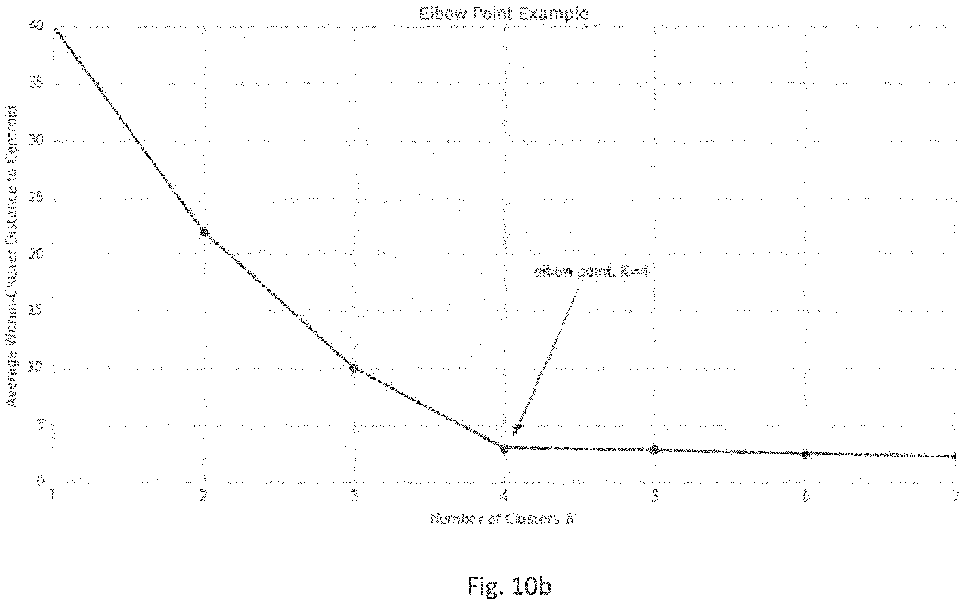

As mentioned above, in the embodiment of Fig. 10a, the number of clusters K has been set to two. According to a further embodiment, an optimal number of clusters K is determined, and the K-means clustering is executed with regard to the optimal number of clusters K. According to the embodiment, the elbow method is applied. The elbow method is generally known and represents a method of interpretation and validation of consistency within cluster analysis designed to help finding the appropriate number of clusters in a dataset. When applying the elbow method, one of the metrics that is commonly used to compare results across different values of K is the mean distance between data points and their cluster centroid. Since increasing the number of clusters will always reduce the distance to data points, increasing K will always decrease this metric, to the extreme of reaching zero when K is the same as the number of data points. Thus, this metric cannot be used as the sole target. Instead, mean distance to the centroid as a function of K is plotted and the "elbow point", where the rate of decrease sharply shifts, can be used to roughly determine K. Fig. 10b illustrates an exemplary appliance of the elbow method according to an exemplary embodiment of the present invention. In the embodiment of Fig. 10b the number of clusters K has been determined as being four (i.e. K=4).

Figs. 8a, 8b and Fig. 9 describe two alternatives for executing step 72. According to an embodiment, one of the two alternatives, i.e. either steps of Figs. 8a, 8b or steps of Fig. 9 are implemented to execute step 72. According to another embodiment, steps of Figs. 8a, 8b and steps Fig. 9 are executed. In this latter case, two results will be obtained, one by executing steps of Figs. 8a and 8b and second by executing steps of Fig. 9. A presence of a match can then be acknowledged if both the result obtained by executing steps of Figs. 8a and 8b and the result obtained by executing steps of Fig. 9 indicate a match. Otherwise, no match will be determined with regard to the further drawing 32.

The security of the user identifying information as well as of the authentication process using the user identifying information may be increased when the predetermined image 31 is a randomly generated image because its public availability may be excluded. If the predetermined image 31 is a randomly generated image, it drastically limits the possibility that it may not be acquired and abused by other users. Thus, the possibility of the imitation of the user identifying information is greatly reduced and even nearly eliminated. Thus, the security of the authentication process using the user identifying information is considerably enhanced.

As to the arrangement of the user identifying information, the user identifying information is associated with or comprises the predetermined image 31. Further, the user identifying information indicates or comprises the tolerance information. Moreover, according to an embodiment, the user identifying information is associated with or comprises the initial drawing 32. According to an embodiment, the user identifying information is associated with or comprises the set of training drawings 32. According to an embodiment, the user identifying information is associated with or comprises the data on the initial drawing 32. According to an embodiment, the user identifying information is associated with or comprises the data on the set of the training drawings 32. As mentioned above, the embodiments described herein may be combined with each other. Thus, the present application allows a flexible arrangement of the user identifying information.

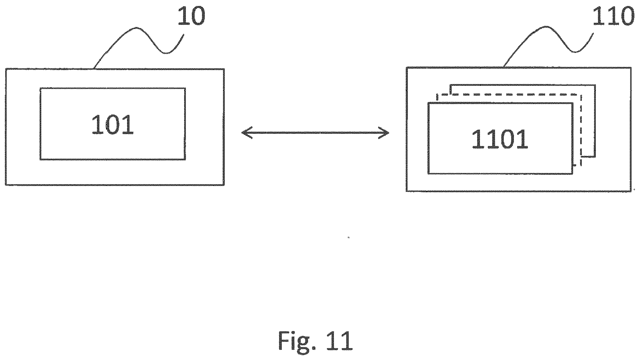

Fig. 11 is a diagram illustrating an implementation of a system 110 configured for randomly generating an image 31 for generation of user identifying data and for execution of an authentication process by use of the user identifying data according to an exemplary embodiment of the present invention. On the one side, according to the embodiment of Fig. 11, the device 10 with the touch screen 101 is provided. On the other side, according to the embodiment Fig. 11, the system 110 is provided, said system 110 being configured to randomly generate the image 31, which may be used for generating the user identifying data as described above and for authenticating the user associated with the user identifying data. The system 110 may be the system 11 of Fig. 1, may overlap with the system 11 of Fig. 1, or may be separate from the system 11 of Fig. 1. Further, the system 110 may be implemented as a whole or partially in device 10. Thus, one or more functions of system 110 may be executed by the system 11 and/or by the device 10.

The device 10 and the system 110 are configured to communicate with each other, which is visualized in Fig. 11 by the arrow between the device 10 and the system 110. The communication between the device 10 and the system 110 can be arranged in different appropriate ways. For example, the communication may be done via a wired or wireless communication connection. For example, the device 10 is arranged to provide/transmit data on user inputs, made by a user (e.g., via touch screen 101), to the system 110, while the system 110 is arranged to randomly generate the image 31 and to provide it to the device 10. Generally, different kinds or information or data may be exchanged between the device 10 and the system 11. Further, according to an embodiment, device 10 and/or system 110 comprises one or more corresponding communication units that are configured to execute the respective data, information, and/or signal communication. According to the embodiment of Fig. 11, the system 110 comprises one or more processing units 1101 that are configured to execute the steps or functions of the system 110, particularly the random generating of the image 31 as described herein.

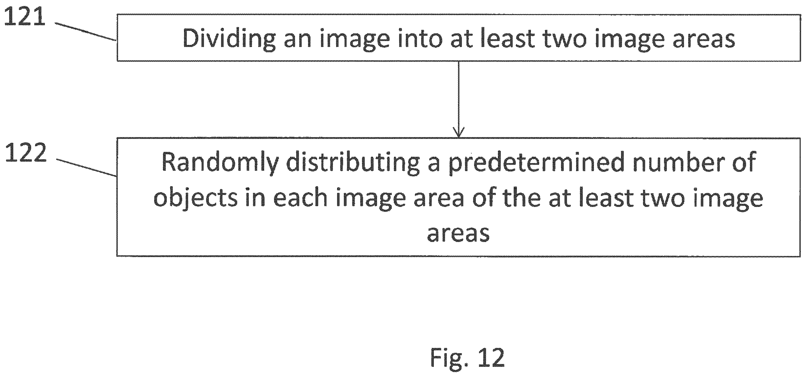

Fig. 12 illustrates steps executed for randomly generating the image 31, usable for generation of user identifying data and for execution of an authentication process by using the user identifying data according to an exemplary embodiment of the present invention. The steps of Fig. 12 are particularly executed by the system 110, e.g., by the one or more processing units 1101 of the system 110.

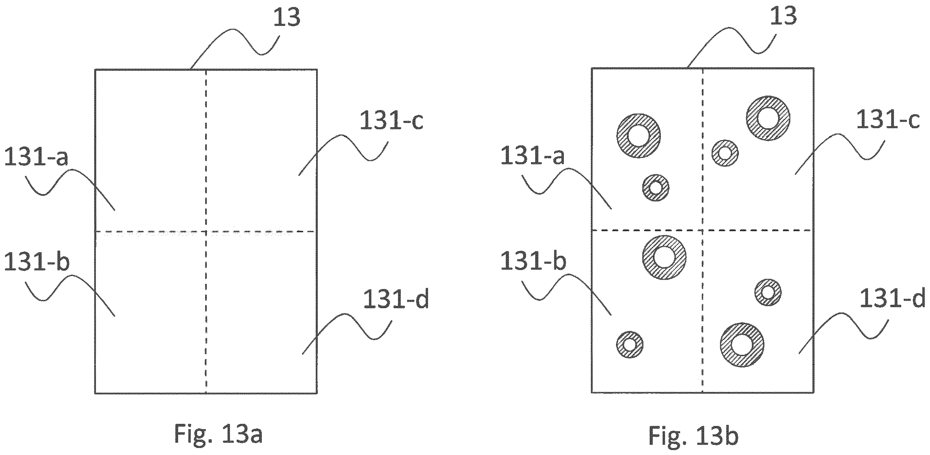

In step 121, an image is divided into at least two image areas. This is exemplary shown in Fig. 13a, where an image 13 is exemplary divided into four image areas 131-a, 131-b, 131-c, and 131-d. In step 122, a predetermined number of objects is distributed in each image area of the at least two image areas 131-a, 131-b, 131-c, and 131-d. The objects comprise, for example, geometric objects. However, the present invention is not restricted to geometric objects only, and any kind of objects may be used in general. By using geometric objects the random generation of the image 13 is simplified and, hence, more efficient since well-known shapes are used. Further, according to an embodiment, the size and/or the shape of the objects is predetermined. This allows a generation of the image 13 that takes into consideration the size of the image 13 and of the respective image areas 131-a, 131-b, 131-c, and 131-d, since the size and/or the shape of the objects may be determined with regard to the size of the image 13 and of the respective image areas 131-a, 131-b, 131-c, and 131-d. Thus, an overloading of the image 13 with objects may be avoided. Fig. 13b shows exemplary the distribution 122 of objects in the at least two image areas 131-a, 131-b, 131-c, and 131-d. According to the exemplary embodiment of Fig. 13b, the predetermined number is two. Thus, two objects are distributed 122 in each one of image areas 131-a, 131-b, 131-c, and 131-d. Further, according to the embodiment of Fig. 13b, the objects have a predetermined shape being the shape of a ring. Additionally, according to the embodiment 13b, the sizes of the objects are predetermined, wherein one of the two rings is smaller than the other.

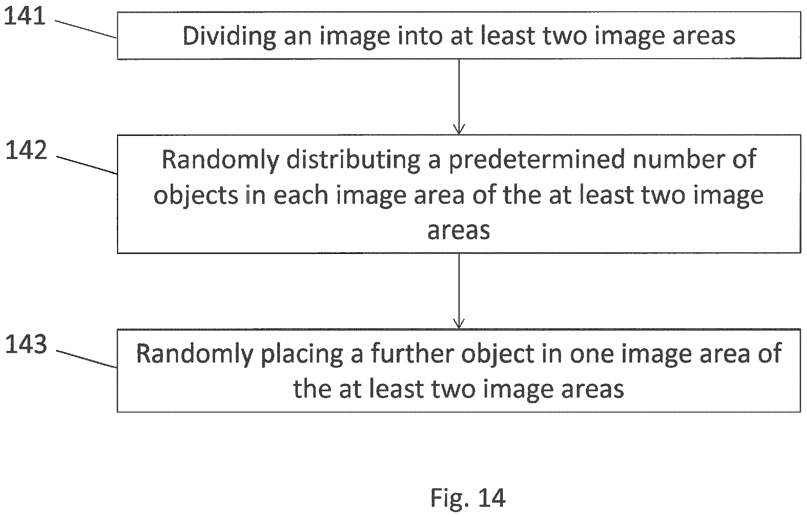

Fig. 14 illustrates steps executed for randomly generating the image 31 usable for generation of user identifying data and for execution of an authentication process by using the user identifying data according to an exemplary embodiment of the present invention. The steps of Fig. 14 are particularly executed by the system 110, e.g., by the one or more processing units 1101 of the system 110.

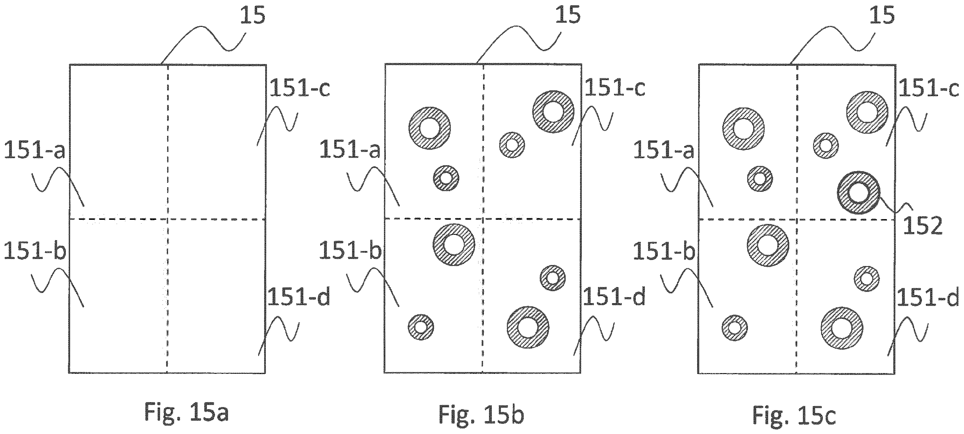

In step 141, an image is divided into at least two image areas. This is exemplary shown in Fig. 15a, where an image 15 is exemplary divided into four image areas 151-a, 151-b, 151-c, and 151-d. In step 142, a predetermined number of objects is distributed in each image area of the at least two image areas 151-a, 151-b, 151-c, and 151-d. Fig. 15b shows exemplary the distribution 142 of objects in the at least two image areas 151-a, 151-b, 151-c, and 151-d. According to the exemplary embodiment of Fig. 15b, the predetermined number is exemplary two. Thus, two objects are distributed 142 in each one of image areas 151-a, 151-b, 151-c, and 151-d. Further, according to the embodiment of Fig. 15b, the objects have a predetermined shape being exemplary the shape of a ring. Additionally, according to the embodiment 15b, the objects have predetermined sizes, wherein one of the two rings is smaller than the other. In step 143, a further object is randomly placed in one of the image areas 151-a, 151-b, 151-c, and 151-d. In this way, the reproducibility of the randomly generated image is hampered, which increases the security of the subsequently generated user identification information and the security of the authentication process using the user identification information. Fig. 15c exemplary visualizes the execution of step 143. According to the embodiment of Fig. 15c, one further object 152 is inserted into image area 151-c. According to the embodiment of Fig. 15c, the further object also has a predetermined shape and/or a predetermined size.

Thus, the predetermined image 31 may be an image that has been randomly generated as explained above.

According to an embodiment, to improve the security of the user identifying data and of the authentication process using the user identifying data, a user may select, as the predetermined image 31, one randomly generated image from a set of randomly generated images. Here, each randomly generated image of the set of randomly generated images may be generated as described above. Thus, before generating user identifying data as described above, a setting of the predetermined image 31 is executed according to an embodiment of the present invention. This setting may be executed, for example, by the device 10 or by any one of the systems described herein.

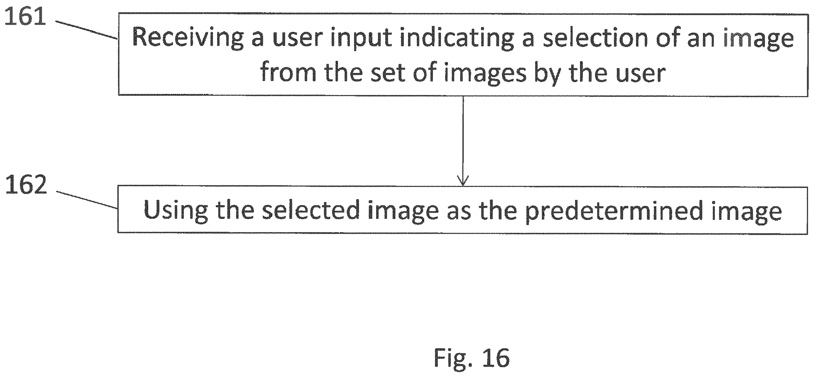

Fig. 16 illustrates steps for setting the predetermined image 31 to be used for generating user identifying data and for executing of an authentication process utilizing the user identifying data according to an exemplary embodiment of the present invention. Prior the setting, a set of randomly generated images 13, 15 is generated by the system 110. The set of randomly generated images 13, 15 is then, for example, presented to the user, with regard to which the user identifying data will be generated. The presentation of the set of randomly generated images 13, 15 to the user is done, according to an embodiment, via the device 10, e.g., via the touch screen of the device 10. The user may then select one randomly generated image 13, 15 of the set of randomly generated images 13, 15 as the predetermined image 31. Thus, in step 161 of Fig. 16, a user input indicting a selection of an image 13, 15 from the set of randomly generated images 13, 14 is received. In step 162 of Fig. 16, the selected image 13, 15 is then used as the predetermined image 31. I.e. the predetermined image 31 is assigned the selected image 13, 15.

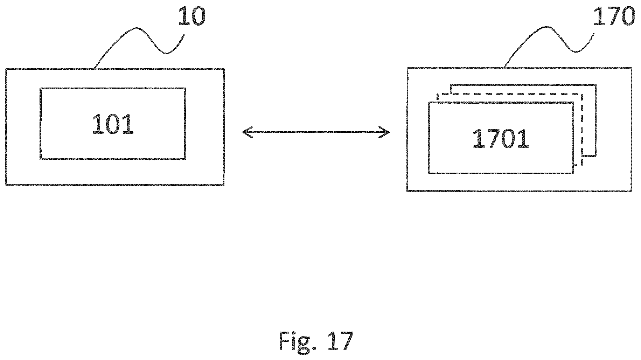

Fig. 17 is a diagram illustrating an implementation of a system 170 configured for authenticating a user by using a corresponding user identifying data according to an exemplary embodiment of the present invention. On the one side, according to the embodiment of Fig. 17, the device 10 with the touch screen 101 is provided. On the other side, according to the embodiment Fig. 17, the system 170 for authenticating a user by using the user identifying data is provided. The system 170 may be the system 11 of Fig. 1, may be the system 110 of Fig. 11, may overlap with the system 11 of Fig. 1 and/or with the system 110 of Fig. 11, or may be separate from the system 11 of Fig. 1 and/or from the system 110 of Fig. 11. Further, the system 170 may be implemented as a whole or partially in device 10.

The device 10 and the system 170 are configured to communicate with each other, which is visualized in Fig. 17 by the arrow between the device 10 and the system 170. The communication between the device 10 and the system 170 can be arranged in different appropriate ways. For example, the communication may be done via a wired or wireless communication connection. For example, the device 10 is arranged to provide/transmit data on user inputs, made by a user (e.g., via touch screen 101), to the system 170, while the system 170 is arranged execute the authentication of the user. Generally, different kinds or information or data may be exchanged between the device 10 and the system 170. Further, according to an embodiment, device 10 and/or system 170 comprises one or more corresponding communication units that are configured to execute the respective data, information, and/or signal communication. According to the embodiment of Fig. 17, the system 170 comprises one or more processing units 1701 that are configured to execute the steps or functions of the system 170, particularly the authentication of a user.

When executing the authentication process, the steps of Fig. 2 are executed according to an embodiment at first. Thus, the user, authentication of which is to be performed by the system 170, draws an authentication drawing 32 on the predetermined image 32 on the touch screen 101 of the device 10. The device 10 collects 22, during the drawing of the authentication drawing 32 on the predetermined image 31, data on the authentication drawing 32, wherein said data is arranged as described above with regard to Figs. 2, 3a, and 3b. Then, after the drawing of the authentication drawing 32 has been finished, the device 10 transmits 23 the collected data on the authentication drawing 32 to the system 170. Additionally, according to an embodiment, the device 10 transmits an indication on the predetermined image 31 and/or a user identification to the system 170 such that the system 170 may gather the corresponding user identifying data. The corresponding user identifying data is, for example, stored on at least one storage device and is arranged as described above. Further, the corresponding user identifying data is associated with or comprises the indication on the predetermined image 31 and/or the user identification. In this case, the system 170 retrieves the corresponding user identifying data from the at least one storage device by use of the indication on the predetermined image 31 and/or the user identification. E.g., the system 170 sends a corresponding data request to the at least one storage device and, in response to the data request, receives the user identifying data.

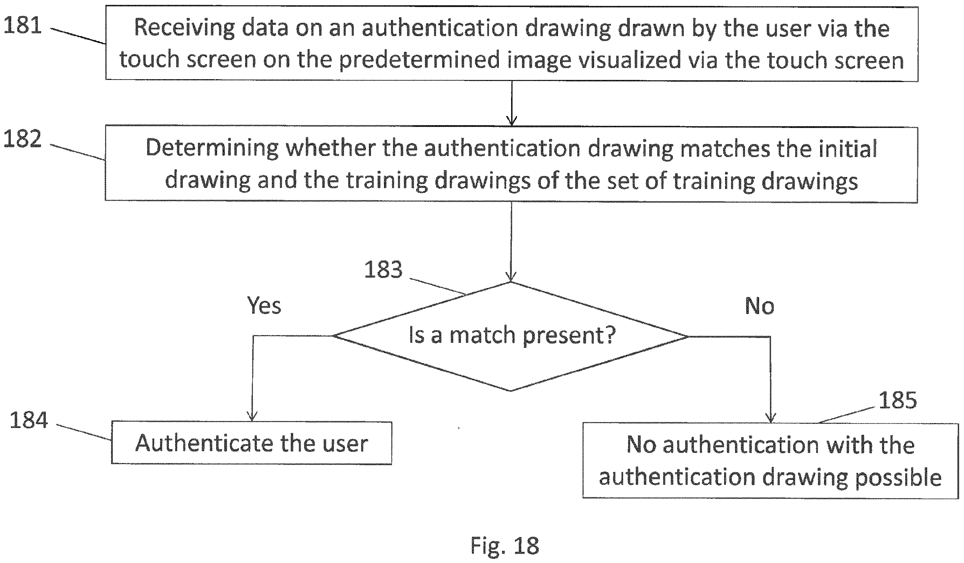

Fig. 18 illustrates steps executed for authenticating a user by use of the corresponding user identifying data according to an exemplary embodiment of the present invention. Particularly, the steps of Fig. 18 are executed by the system 170.

In step 181, the system 170 receives data on the authentication drawing 32 drawn by the user via the touch screen 101 on the predetermined image 31 visualized via the touch screen 31. As mentioned, the data on the authentication drawing 32 is arranged in the same way as described above with regard to Figs. 2, 3a, and 3b. Then, in step 182, the system 170 determines whether the authentication drawing matches the initial drawing 32 and the training drawings 32 of the set of training drawings. Step 182 is executed in the same way as step 72, wherein instead of the further drawing 32 of step 72 the authentication drawing 32 is used. I.e. instead of the data on the further drawing 32 of step 72 the data on the authentication drawing 32 is used in step 182. If a match is present 183, the user is authenticated 184. Otherwise, if no match is present 183, no authentication with the authentication drawing 32 is possible 185. In the latter case, according to an embodiment, the user may repeat the authentication and draw a further authentication drawing 32 such that the steps of Fig. 18 are executed anew with regard to the further authentication drawing 32. According to a further embodiment, the user is allowed to repeat the authentication a predetermined number of times (e.g., three times). When the predetermined number of times is exceeded, no further repetition of the authentication process is permitted.

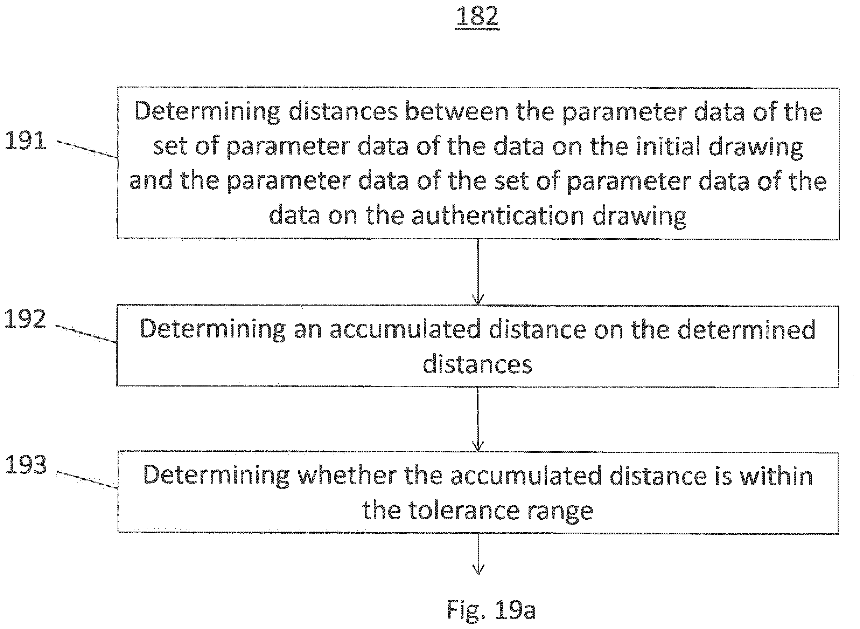

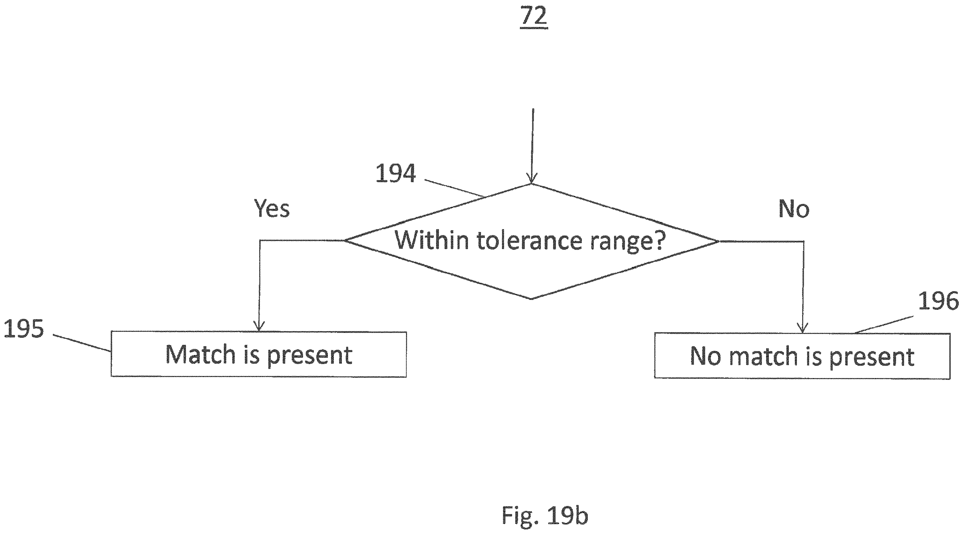

Figs. 19a and 19b illustrate sub-steps of determining whether the authentication drawing 32 matches the initial drawing 32 and the training drawings 32 of the set of training drawings by use of the user identifying information according to an exemplary embodiment of the present invention. The steps of Figs. 19a and 19b are executed in the same way as the steps of Figs. 8a and 8b with the difference that instead of handling a further drawing 32 as in steps of Figs. 8a and 8b the steps of Figs. 19a and 19b correspondingly handle the authentication drawing 32.

Thus, in step 191, distances between the parameter data of the set of parameter data of the data on the initial drawing and the parameter data of the set of parameter data of the authentication drawing are determined in the same way as described with regard to step 81. In step 192, the determination of the accumulated distance on the determined distances is executed in the same way as described with regard to step 82. In step 193, it is determined in the same way as described with regard to step 83 whether or not the accumulated distance is within the respective tolerance range, wherein the system 170 gathers the tolerance range from the user identifying information. If the accumulated distance is within the tolerance range 194, a match is present 195. Otherwise, if the accumulated distance is not within the tolerance range 194, no match is present 196. The steps 194 to 196 of Fig. 19b are executed in the same way as the steps 84 to 86 of Fig. 8b.

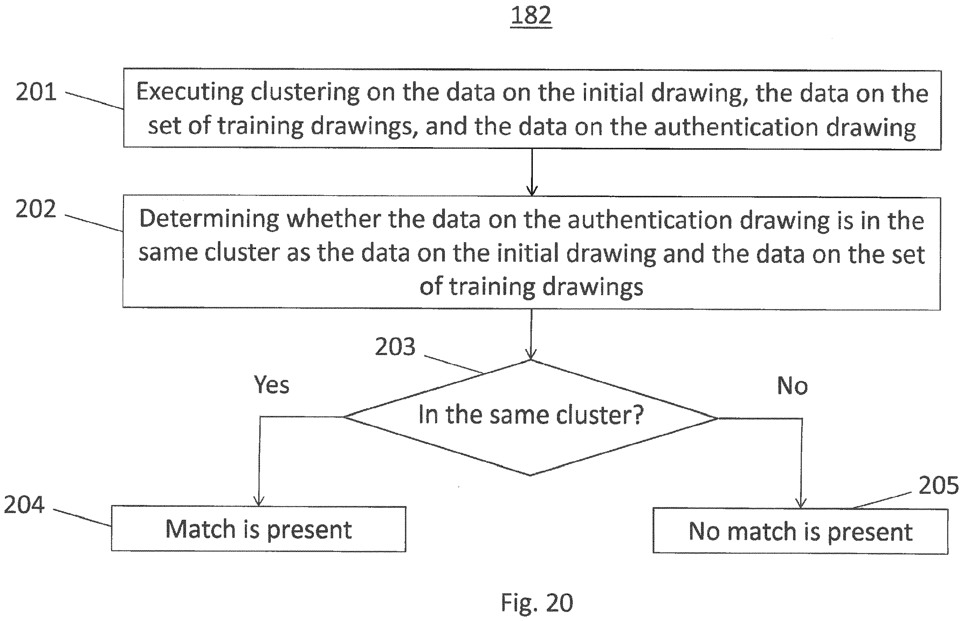

Fig. 20 illustrates sub-steps of determining whether the authentication drawing 32 matches the initial drawing 32 and the training drawings 32 of the set of training drawings by use of the user identifying information according to a further exemplary embodiment of the present invention. The steps of Fig. 20 are executed in the same way as the steps of Fig. 9 with the difference that instead of handling a further drawing 32 as in steps of Fig. 9 the steps of Fig. 20 correspondingly handle the authentication drawing 32.

Similarly to the embodiment of Fig. 9, the authentication drawing 32 is considered as authenticating the user if the data on the authentication drawing are clustered in the same cluster as the data on the initial drawing 32 and the test drawings 32 of the set of test drawings.

In step 201, the system 170 executes clustering on the data on the initial drawing 32, the data on the set of training drawings, and the data on the authentication drawing 32. The step 201 is executed in the same way as step 91. In step 202, the system 170 determines whether the data on the authentication drawing 32 is in the same cluster as the data on the initial drawing 32 and the data on the set of training drawings 32. The step 202 is executed in the same way as step 92. If the verification 230 shows that the data on the authentication drawing 32 is in the same cluster as the data on the initial drawing 32 and the data on the set of training drawings 32, a match is present 204. Otherwise, no match is present 205, and no authentication of the user can be done in view of the authentication drawing 32. The steps 203 to 205 are executed in the same way as the steps 93 to 95 of Fig. 9.

Figs. 19a, 19b and Fig. 20 describe two alternatives for executing step 182. According to an embodiment, one of the two alternatives, i.e. either steps of Figs. 19a, 19b or steps of Fig. 9 are implemented to execute step 182. According to another embodiment, steps of Figs. 19a, 19b and steps Fig. 20 are executed. In this latter case, two results will be obtained, one by executing steps of Figs. 19a, 19b and second by executing steps of Fig. 20. A presence of a match can then be acknowledged if both the result obtained by executing steps of Figs. 19a, 19b and the result obtained by executing steps of Fig. 20 indicate a match. Otherwise, no match will be determined with regard to the authentication drawing 32.

Furthermore, it has to be noted that, if an authentication of the user is executed with regard to an authentication drawing 32, the post-processing of the user identifying data may be executed by using the data on the authentication drawing 32 for improving the quality and safety of the user identifying data and, thus, for improving the safety of the authentication process utilizing the post-processed user identifying data. In this case, the steps as shown in Fig. 7 are executed, wherein the authentication drawing 32 is handled as the further drawing 32 of Fig. 7. In this way, a continuous improvement of the user identifying data and of the safety of the respective authentication process utilizing the user identifying data is achieved. The post-processing of the user identifying data with regard to the authentication drawing 32, by use of which the authentication of the user could be achieved, may be executed by any one of the systems described herein.

Thus, as can be derived from the aforesaid, the present invention is directed to generating of user identifying data based on an initial drawing and a set of training drawings drawn via a touch screen on a predetermined image visualized on the touch screen. Further, the present invention is directed to authenticating a user based on the corresponding user identifying data. Additionally, the present invention is directed to generating the predetermined image to be used for the generation of user identifying data and the authenticating of the user.

It has to be noted that any of the embodiments and features of any of the embodiments, described herein, may be combined with each other, unless a combination is explicitly excluded.

Additionally, also other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1.  A method arranged to generate user identifying data for identifying a user, the method comprising:

    receiving data on an initial drawing drawn by the user via a touch screen on a predetermined image visualized via the touch screen;

    receiving data on a set of training drawings drawn by the user via the touch screen on the predetermined image; and

    generating, by use of the data on the initial drawing and by use of the data of the set of training drawings, the user identifying data that is associated with the predetermined image and that allows an identification of the user.

2. A method arranged to authenticate a user, the method comprising:

receiving data on an authentication drawing drawn by the user via a touch screen on a predetermined image visualized via the touch screen;

determining, by use of a user identifying information, whether the authentication drawing matches an initial drawing on the predetermined image and training drawings of a set of training drawings, the initial drawing and the training drawings being drawn by the user, via the touch screen, on the predetermined image and being used for generating the user identifying information; and

authenticating the user if the authentication drawing matches the initial drawing and the training drawings of the set of training drawings.

3. The method according to claim 1 or 2, wherein:

the data on the initial drawing comprises, with regard to a drawing time spent by the user to draw the initial drawing, a set of parameter data that occurred during the drawing of the initial drawing via the touch screen, wherein each parameter data of the set of parameter data is associated with a respective time point, at which the parameter data occurred when drawing the initial drawing;

the data on the set of training drawings comprises for each training drawing of the set of training drawings, with regard to a drawing time spent by the user to draw the respective training drawing, a corresponding set of parameter data that occurred during the drawing of the respective training drawing via the touch screen, wherein each parameter data of the set of parameter data is associated with a respective time point, at which the parameter data occurred when drawing the respective training drawing; and/or

the data on the authentication drawing comprises, with regard to a drawing time spent by the user to draw the authentication drawing, a corresponding set of parameter data that occurred during the drawing of the authentication drawing via the touch screen, wherein each parameter data of the set of parameter data is associated with a respective time point, at which the parameter data occurred when drawing the authentication drawing.

4. The method according to claim 3, wherein:

each parameter data of the set of parameter data, which occurred during the drawing of the initial drawing via the touch screen, comprises at least one of the following parameters: pressure on the touch screen; coordinates of the initial drawing indicating on the predetermined image a pixel of the initial drawing; speed; and/or acceleration;

each parameter data of the set of parameter data, which occurred during the drawing of the respective training drawing via the touch screen, comprises at least one of the following parameters: pressure on the touch screen; coordinates of the respective training drawing indicating on the predetermined image a pixel of the respective training drawing; speed; and/or acceleration; and/or

each parameter data of the set of parameter data, which occurred during the drawing of the authentication drawing via the touch screen, comprises at least one of the following parameters: pressure on the touch screen; coordinates of the authentication drawing indicating on the predetermined image a pixel of the authentication drawing; speed; and/or acceleration.

5. The method according to any one of claims 1 to 4, wherein:

the user identifying data comprises a tolerance information for determining whether or not another drawing, drawn by the user via the touch screen on the predetermined image, matches the initial drawing and/or the training drawings of the set of the trainings drawings;

the generating of the user identifying data comprises determining the tolerance information;

the tolerance information indicates a tolerance information with regard to at least one parameter occurring when drawing on the touch screen;

the tolerance information indicates a tolerance range of allowable accumulated distances, each accumulated distance being an accumulated distance on distances between parameter data of two drawings, wherein the distances are determined for parameter data having corresponding time points;

wherein the determining of the tolerance information comprises, for each training drawing of the set of training drawings, determining a respective accumulated distance on distances between the parameter data of the set of parameter data of the data on the initial drawing and the parameter data of the set of parameter data of the data on the respective training drawing, wherein the distances are determined for parameter data having corresponding time points;

a lower bound of the tolerance range is determined by subtracting, from a mean of the accumulated distances, a standard deviation from a mean of the accumulated distances; and/or

an upper bound of the tolerance range is determined by adding the mean of the accumulated distances and the standard deviation from the mean of the accumulated distances.

**6.** The method according to claim 1 or according to claim 1 and any one of the preceding claims 3 to 5, the method further comprising:

receiving data on a further drawing on the predetermined image, the further drawing being drawn by the user via the touch screen on the predetermined image visualized via the touch screen;

determining, by use of the user identifying information, whether the further drawing matches the initial drawing and the training drawings of the set of training drawings; and

if the further drawing matches the initial drawing and the training drawings of the set of training drawings, the method further comprises:

adding the further drawing to the set of training drawings; and

post-processing the user identifying data by use of the data on the further drawing.

**7.** The method according to claim 6, wherein:

the data on the further drawing comprises, with regard to the drawing time spent by the user to draw the further drawing, a corresponding set of parameter data that occurred during the drawing of the further drawing via the touch screen, wherein each parameter data of the set of parameter data is associated with a respective time point, at which the parameter data occurred when drawing the further drawing; and/or

each parameter data of the set of parameter data, which occurred during the drawing of the further drawing via the touch screen, comprises at least one of the following parameters: pressure on the touch screen; coordinates of the further drawing indicating on the predetermined image a pixel of the further drawing; speed; and/or acceleration.

**8.** The method according to any one of the preceding claims, wherein:

the determining whether the further drawing matches the initial drawing and the training drawings of the set of training drawings further comprises:

using the tolerance information of the user identifying information for determining whether or not the further drawing matches the initial drawing and the training drawings of the set of the trainings drawings; and/or

executing a clustering based on the data on the initial drawing, the data on the set of training drawings, and the data on the further drawing; and/or

the determining whether the authentication drawing matches the initial drawing and the training drawings of the set of training drawings comprises:

using the tolerance information of the user identifying information for determining whether or not the authentication drawing matches the initial drawing and the training drawings of the set of the trainings drawings; and/or

executing a clustering based on the data on the initial drawing, the data on the set of training drawings, and the data on the authentication drawing.

**9.** The method according to claim 8, wherein:

the executing of the clustering based on the data on the initial drawing, the data on the set of training drawings, and the data on the further drawing comprises:

determining whether, based on the data on the further drawing, the same cluster is determined as based on the data on the initial drawing and the data on the set of training drawings; and

determining that the further drawing matches the initial drawing and the training drawings of the set of training drawings if the same cluster is determined;

the using of the tolerance information of the user identifying information for determining whether or not the further drawing matches the initial drawing and the training drawings of the set of the trainings drawings comprises:

determining, with regard to the further drawing, an accumulated distance of the further drawing on distances between the parameter data of the set of parameter data of the data on the initial drawing and the parameter data of the set of parameter data of the data on the further drawing, wherein the distances are determined for parameter data having corresponding time points;
determining whether the accumulated distance of the further drawing is within the tolerance range indicated by the tolerance information; and
determining that the further drawing matches the initial drawing and the training drawings of the set of training drawings if the accumulated distance of the further drawing is within the tolerance range;

the executing of the clustering based on the data on the initial drawing, the data on the set of training drawings, and the data on the authentication drawing comprises:

determining whether, based on the data on the authentication drawing, the same cluster is determined as based on the data on the initial drawing and the data on the set of training drawings; and
determining that the authentication drawing matches the initial drawing and the training drawings of the set of training drawings if the same cluster is determined; and/or

the using of the tolerance information for determining whether or not the authentication drawing matches the initial drawing and the training drawings of the set of the trainings drawings comprises:

determining, with regard to the authentication drawing, an accumulated distance of the authentication drawing on distances between parameter data of the set of parameter data of data on the initial drawing and the parameter data of the set of parameter data of the data on the authentication drawing, wherein the distances are determined for parameter data having corresponding time points;
determining whether the accumulated distance of the authentication drawing is within the tolerance range indicated by the tolerance information; and
determining that the authentication drawing matches the initial drawing and the training drawings of the set of training drawings if the accumulated distance of the authentication drawing is within the tolerance range.

10. The method according to any one of the preceding claims 2 to 9, wherein, if the authentication drawing matches the initial drawing and the training drawings of the set of training drawings, the method further comprises:

adding the authentication drawing to the set of training drawings; and
post-processing the user identifying data by use of the data on the authentication drawing.

11. The method according to claim 1 or according to claim 1 and any one of the preceding claims 3 to 9, wherein:

the method farther comprises randomly generating a set of images, wherein each one of the images of the set of images comprises at least one object randomly located on the respective image; and/or
the predetermined image is an image of the set of images selected by the user.

12. The method according to claim 11, wherein the randomly generating of the set of images comprises randomly generating each image of the set of images by:

dividing the image into at least two image areas; and
randomly distributing a predetermined number of objects in each image area of the at least two image areas.

13. The method according to claim 12, wherein the randomly generating of the set of images further comprises a random placing of a further object in one image area of the at least two image areas.

14. A system configured to execute steps of a method according to any one of the preceding claims.

15. A machine-readable medium comprising instructions stored therein, which, when executed by a computer, cause the computer to perform steps of a method according to any one of the preceding claims.

Fig. 1

21 — Display a predetermined image on touch screen

22 — Collect data on a drawing drawn by the user via the touch screen on the predetermined image

23 — Transmit collected data on the drawing to the system for generating user identifying data

Fig. 2

Fig. 3b

Fig. 3a

41 — Receiving data on an initial drawing drawn by the user via a touch screen on a predetermined image visualized on the touch screen

42 — Receiving data on a set of training drawings drawn by the user via the touch screen on the predetermined image visualized on the touch screen

43 — Generating user identifying data

Fig. 4

| 51 | Determining distances between the parameter data of the set of parameter data of the data on the initial drawing and the parameter data of the set of parameter data of the data on a training drawing of the set of training drawings |
|----|---|

| 52 | Determining an accumulated distance on the determined distances |
|----|---|

Fig. 5

Fig. 6

71 — Receiving data on a further drawing drawn by the user via the touch screen on the predetermined image visualized via the touch screen

72 — Determining whether the further drawing matches the initial drawing and the training drawings of the set of training drawings by use of the user identifying information

Yes    73 — Match?    No

74 — Adding the further drawing to the set of training drawings

76 — End

75 — Post-processing the user identifying data

Fig. 7

81 — Determining distances between the parameter data of the set of parameter data of the data on the initial drawing and the parameter data of the set of parameter data of the data on the further drawing

82 — Determining an accumulated distance on the determined distances

83 — Determining whether the accumulated distance is within the tolerance range

Fig. 8a

EP 3 483 761 A1

72

84 — Within tolerance range?

No → No match is present — 86

Yes → Match is present — 85

Fig. 8b

<u>72</u>

91 — Executing clustering on the data on the initial drawing, the data on the set of training drawings, and the data on the further drawing

92 — Determining whether the data on the further drawing is in the same cluster as the data on the initial drawing and the data on the set of training drawings

93 — In the same cluster?

Yes

No

94 — Match is present

No match is present — 95

Fig. 9

EP 3 483 761 A1

Fig. 10a

Fig. 10b

Fig. 11

121 — Dividing an image into at least two image areas

122 — Randomly distributing a predetermined number of objects in each image area of the at least two image areas

Fig. 12

Fig. 13b

Fig. 13a

EP 3 483 761 A1

141 ── | Dividing an image into at least two image areas |

142 ── | Randomly distributing a predetermined number of objects in each image area of the at least two image areas |

143 ── | Randomly placing a further object in one image area of the at least two image areas |

Fig. 14

Fig. 15c

Fig. 15b

Fig. 15a

161 — Receiving a user input indicating a selection of an image from the set of images by the user

162 — Using the selected image as the predetermined image

Fig. 16

EP 3 483 761 A1

Fig. 17

EP 3 483 761 A1

181 — Receiving data on an authentication drawing drawn by the user via the touch screen on the predetermined image visualized via the touch screen

182 — Determining whether the authentication drawing matches the initial drawing and the training drawings of the set of training drawings

183 — Is a match present?

Yes

No

184 — Authenticate the user

185 — No authentication with the authentication drawing possible

Fig. 18

## 182

| |
|---|
| Determining distances between the parameter data of the set of parameter data of the data on the initial drawing and the parameter data of the set of parameter data of the data on the authentication drawing |

191

| |
|---|
| Determining an accumulated distance on the determined distances |

192

| |
|---|
| Determining whether the accumulated distance is within the tolerance range |

193

Fig. 19a

EP 3 483 761 A1

Fig. 19b

201 — Executing clustering on the data on the initial drawing, the data on the set of training drawings, and the data on the authentication drawing

202 — Determining whether the data on the authentication drawing is in the same cluster as the data on the initial drawing and the data on the set of training drawings

Yes    203 —    No

In the same cluster?

204 — Match is present

No match is present    205

Fig. 20

EP 3 483 761 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/047252 A1 (JOHNSON JEFFREY JAY [US] ET AL) 21 February 2013 (2013-02-21) * figures 1,2,3a,3b,4,6,7 * * paragraph [0006] * * paragraph [0013] - paragraph [0014] * * paragraph [0020] - paragraph [0021] * * paragraph [0046] - paragraph [0050] * ----- | 1-10,14, 15 | INV. G06F21/31 G06F21/36 G06F21/32 G06K9/00 |
| X | US 2013/169577 A1 (ROFOUGARAN AHMADREZA [US]) 4 July 2013 (2013-07-04) * figures 29-38 * * paragraph [0130] - paragraph [0152] * ----- | 1-10,14, 15 | |
| A | US 2010/225443 A1 (BAYRAM SEVINC [US] ET AL) 9 September 2010 (2010-09-09) * figures 3,4,7 * * paragraph [0029] * * paragraph [0033] * * paragraph [0039] - paragraph [0043] * ----- | 1-15 | |
| A | US 2015/169862 A1 (SMITH NED M [US]) 18 June 2015 (2015-06-18) * figures 2,3 * * paragraph [0026] - paragraph [0029] * ----- | 1-15 | TECHNICAL FIELDS SEARCHED (IPC) G06F G06K |

The present search report has been drawn up for all claims

| Place of search | Date of completion of the search | Examiner |
|---|---|---|
| Munich | 16 March 2018 | Pohl, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 1047

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2018

| Patent document cited in search report | | | Publication date | Patent family member(s) | | | Publication date |
|---|---|---|---|---|---|---|---|
| US 2013047252 | A1 | | 21-02-2013 | AU | 2011202415 | B1 | 12-04-2012 |
| | | | | CA | 2836052 | A1 | 29-11-2012 |
| | | | | CA | 2990803 | A1 | 29-11-2012 |
| | | | | CA | 2990808 | A1 | 29-11-2012 |
| | | | | CN | 103548031 | A | 29-01-2014 |
| | | | | CO | 6842001 | A2 | 20-01-2014 |
| | | | | EP | 2715597 | A1 | 09-04-2014 |
| | | | | JP | 5969012 | B2 | 10-08-2016 |
| | | | | JP | 2014520313 | A | 21-08-2014 |
| | | | | KR | 20140043079 | A | 08-04-2014 |
| | | | | KR | 20180019238 | A | 23-02-2018 |
| | | | | MX | 348331 | B | 07-06-2017 |
| | | | | NZ | 618124 | A | 29-08-2014 |
| | | | | RU | 2013152162 | A | 27-05-2015 |
| | | | | SG | 195066 | A1 | 30-12-2013 |
| | | | | TW | 201303634 | A | 16-01-2013 |
| | | | | TW | 201633096 | A | 16-09-2016 |
| | | | | US | 2012304284 | A1 | 29-11-2012 |
| | | | | US | 2013047252 | A1 | 21-02-2013 |
| | | | | WO | 2012161727 | A1 | 29-11-2012 |
| US 2013169577 | A1 | | 04-07-2013 | US | 2010321304 | A1 | 23-12-2010 |
| | | | | US | 2012262401 | A1 | 18-10-2012 |
| | | | | US | 2013169577 | A1 | 04-07-2013 |
| US 2010225443 | A1 | | 09-09-2010 | NONE | | | |
| US 2015169862 | A1 | | 18-06-2015 | CN | 104303188 | A | 21-01-2015 |
| | | | | EP | 2864922 | A1 | 29-04-2015 |
| | | | | US | 2013347087 | A1 | 26-12-2013 |
| | | | | US | 2015169862 | A1 | 18-06-2015 |
| | | | | WO | 2014004093 | A1 | 03-01-2014 |

EPO FORM P0459

For more details about this annex : see Official Journal of the European Patent Office, No. 12/82